# EUROPEAN PATENT APPLICATION

(11) **EP 4 167 126 A1**
(43) Date of publication of application: **19.04.2023**
(21) Application number: 21834506.4
(22) Date of filing: 18.05.2021
(51) Int. Cl.: G06K 9/00, G06N 3/04

(54) **METHOD FOR INFERRING LANE, AND METHOD AND APPARATUS FOR TRAINING LANE INFERENCE MODEL**

(30) Priority: 02.07.2020 CN 202010626061
(71) Applicant: Huawei Technologies Co., Ltd., Longgang Shenzhen, Guangdong 518129 (CN)
(72) Inventor: DING, Jieyun, Shenzhen, Guangdong 518129 (CN); GAO, Wei, 271031 Singapore (SG); TAO, Yongxiang, Shenzhen, Guangdong 518129 (CN); HSU, David, Singapore 609781 (SG); XIONG, Jianhui, Shenzhen, Guangdong 518129 (CN); WEI, Longhui, Shenzhen, Guangdong 518129 (CN)
(74) Representative: Huawei European IPR
(86) International application number: PCT/CN2021/094256
(87) International publication number: WO 2022/001432

(57) **Abstract**

A lane inference method and a lane inference model training method and apparatus are provided, and relate to an environment cognition technology in the field of automated driving in the field of artificial intelligence. The method includes: obtaining detection results of a plurality of different types of sensors of a vehicle (710); performing coordinate system conversion on the detection results to obtain traffic element data in a same coordinate system (720); and performing lane inference based on the traffic element data by using a preset neural network model, to obtain a lane of the vehicle (730). The foregoing method helps reduce complexity of the neural network model used for lane inference.

## Description

This application claims priority to Chinese Patent Application No. 202010626061.4, filed with the China National Intellectual Property Administration on July 2, 2020 and entitled "LANE INFERENCE METHOD AND LANE INFERENCE MODEL TRAINING METHOD AND APPARATUS", which is incorporated herein by reference in its entirety.

### TECHNICAL FIELD

This application relates to the automated driving field, and more specifically, to a lane inference method and a lane inference model training method and apparatus.

### BACKGROUND

Artificial intelligence (artificial intelligence, AI) is a theory, a method, a technology, or an application system that simulates, extends, and expands human intelligence by using a digital computer or a machine controlled by the digital computer, to sense an environment, obtain knowledge, and obtain an optimal result by using the knowledge. In other words, the artificial intelligence is a branch of computer science, and is intended to understand the essence of intelligence and produce a new intelligent machine that can react in a manner similar to human intelligence. The artificial intelligence is to study design principles and implementation methods of various intelligent machines, so that the machines have perception, inference, and decision-making functions. Researches in the field of artificial intelligence include robotics, natural language processing, computer vision, decision-making and inference, human-computer interaction, recommendation and search, an AI basic theory, and the like.

Automated driving is a mainstream application in the field of artificial intelligence. The automated driving technology relies on collaboration of computer vision, a radar, a monitoring apparatus, a global positioning system, and the like, to implement automated driving of a motor vehicle without human intervention. An automated driving vehicle uses various computing systems to assist in transporting passengers or goods from one location to another location. Some automated driving vehicles may require some initial or continuous input from operators (such as navigators, drivers, or passengers). The automated driving vehicle allows the operator to switch from a manual operation mode to an automated driving mode or a mode between the manual operation mode and the automated driving mode. Because the automated driving technology does not require a human to drive the motor vehicle, driving errors caused by people can be effectively avoided in theory, traffic accidents can be reduced, and road transportation efficiency can be improved. Therefore, the automated driving technology attracts increasing attention.

Whether the vehicle can obtain an accurate and optional available lane during automated driving is a key factor affecting automated driving safety. For example, training data may be collected in an offline environment to train a neural network model, and lane inference is performed by using a trained neural network model. However, currently, the trained neural network model is usually complex.

### SUMMARY

This application provides a lane inference method and a lane inference model training method and apparatus, to help reduce complexity of a neural network model used for lane inference.

According to a first aspect, a lane inference method is provided. The method includes:
obtaining detection results of a plurality of different types of sensors of a vehicle; performing coordinate system conversion on the detection results, to obtain traffic element data in a same coordinate system; and performing lane inference based on the traffic element data by using a preset neural network model, to obtain a lane of the vehicle.

In the conventional technology, when a neural network model needs to implement a large quantity of functions, for example, when a generalization capability of a light condition, a road surface type, and the like, road surface cognition, matching between a road surface and a driving intention, and processing of a dynamic obstacle and a static obstacle all rely on the same neural network model, the neural network model is excessively complex.

For such a neural network model with high complexity, a design requirement of the model is also very high. Currently, it is difficult to design a neural network model that reaches a practicability level and that can process a complex task (for example, a neural network model that can process a complex automated driving task).

In this embodiment of this application, the traffic element data is data in a same coordinate system. This can avoid a case in which the neural network model is excessively complex because a plurality of different types of data need to be processed, to reduce complexity of the neural network model used for lane inference.

It should be noted that the obtaining the traffic element data detected by the plurality of different types of sensors may include: directly obtaining original data detected by the sensors. In other words, in this case, the detected original data is the traffic element data.

Alternatively, the obtaining the traffic element data detected by the plurality of different types of sensors may include: after the detection results detected by the sensors (for example, original data or original images obtained by the sensors) are obtained, processing the detected detection results to obtain processing results. In this case, the processing result obtained after the processing is the traffic element data.

With reference to the first aspect, in some implementations of the first aspect, the obtaining the traffic element data detected by the plurality of different types of sensors of the vehicle includes: obtaining the detection results of the plurality of different types of sensors; and processing the detection results to obtain the traffic element data.

In this embodiment of this application, the detection results of the plurality of different types of sensors are obtained, and the detection results are processed to obtain the traffic element data in the same coordinate system. This can avoid a case in which the neural network model is excessively complex because the detection results (the detection results include a plurality of different types of data) need to be directly processed, to reduce complexity of the neural network model used for lane inference.

With reference to the first aspect, in some implementations of the first aspect, the processing the detection results to obtain the traffic element data includes: performing coordinate system conversion on the detection results to obtain the traffic element data.

In this embodiment of this application, coordinate system conversion is performed on the detection results, so that the detection results can be converted into the same coordinate system. This can avoid a case in which the neural network model is excessively complex because the detection results (the detection results include a plurality of different types of data) need to be directly processed, to reduce complexity of the neural network model used for lane inference.

With reference to the first aspect, in some implementations of the first aspect, the plurality of different types of sensors include a camera, a laser radar, or a millimeter-wave radar.

With reference to the first aspect, in some implementations of the first aspect, the traffic element data is a contour, a location, and/or a moving track of a traffic element, and the traffic element includes one or more of a lane identification line, another vehicle near the vehicle, a pedestrian, a road, or a traffic light.

With reference to the first aspect, in some implementations of the first aspect, the method further includes: determining an environment perception image based on the traffic element data, where the environment perception image indicates an ambient environment of the vehicle and the traffic element, and the environment perception image includes at least one of a surround view image or a front view image. The performing lane inference based on the traffic element data by using a preset neural network model, to obtain a lane of the vehicle comprises: performing lane inference based on the environment perception image by using the preset neural network model, to obtain the lane of the vehicle.

In this embodiment of this application, the ambient environment of the vehicle may be intuitively represented by using the environment perception image. In this case, lane inference is performed based on the environment perception image, so that the lane (of the vehicle) obtained through inference may be more accurate.

Optionally, the determining an environment perception image based on the traffic element data includes: superimposing the traffic element on an initial image (for example, a surround view image obtained after one or more frames of perception images collected by the sensor are stitched, or a generated an initial image that is centered on the vehicle and that has a blank environment) based on the traffic element data, to obtain the environment perception image.

With reference to the first aspect, in some implementations of the first aspect, the performing lane inference based on the traffic element data by using a preset neural network model, to obtain a lane of the vehicle includes: performing lane inference based on the traffic element data and a driving intention of the vehicle by using the preset neural network model, to obtain the lane of the vehicle, where the driving intention of the vehicle indicates a future driving route of the vehicle.

In this embodiment of this application, the driving intention of the vehicle indicates the future driving route of the vehicle. Lane inference is performed based on the traffic element data and the driving intention of the vehicle, so that the lane (of the vehicle) obtained through inference may be more accurate.

With reference to the first aspect, in some implementations of the first aspect, the driving intention of the vehicle is a schematic route diagram of a future driving lane of the vehicle or a vehicle semantic indication, and the vehicle semantic indication indicates at least one of a driving direction, a driving lane, or a driving intersection of the vehicle.

In this embodiment of this application, the driving intention of the vehicle is the schematic route diagram or the vehicle semantic indication, and the future driving route of the vehicle can be intuitively and accurately indicated by using the driving intention of the vehicle.

With reference to the first aspect, in some implementations of the first aspect, the lane of the vehicle is represented by using a center line of the lane and a width of the lane, or the lane of the vehicle is represented by using a road surface cost map.

In this embodiment of this application, the lane of the vehicle can be intuitively and accurately represented by using the center line of the lane and the width of the lane or the road surface cost map.

According to a second aspect, a lane inference model training method is provided. The method includes:
obtaining detection results of a plurality of different types of sensors of a vehicle; performing coordinate system conversion on the detection results, to obtain traffic element data in a same coordinate system; performing lane inference based on the traffic element data by using a lane inference model, to obtain a lane of the vehicle; and adjusting a parameter of the lane inference model based on the lane of the vehicle.

In the conventional technology, when a neural network model needs to implement a large quantity of functions, for example, when a generalization capability of a light condition, a road surface type, and the like, road surface cognition, matching between a road surface and a driving intention, and processing of a dynamic obstacle and a static obstacle all rely on the same neural network model, the neural network model is excessively complex.

For such a neural network model with high complexity, a design requirement of the model is also very high. Currently, it is difficult to design a neural network model that reaches a practicability level and that can process a complex task (for example, a neural network model that can process a complex automated driving task).

In this embodiment of this application, the traffic element data is data in a same coordinate system. This can avoid a case in which the lane inference model is excessively complex because a plurality of different types of data need to be processed, to reduce complexity of the lane inference model.

It should be noted that the obtaining the traffic element data detected by the plurality of different types of sensors may include: directly obtaining original data detected by the sensors. In other words, in this case, the detected original data is the traffic element data.

Alternatively, the obtaining the traffic element data detected by the plurality of different types of sensors may include: after the detection results detected by the sensors (for example, original data or original images obtained by the sensors) are obtained, processing the detected detection results to obtain processing results. In this case, the processing result obtained after the processing is the traffic element data.

With reference to the second aspect, in some implementations of the second aspect, the obtaining the traffic element data detected by the plurality of different types of sensors of the vehicle includes: obtaining the detection results of the plurality of different types of sensors; and processing the detection results to obtain the traffic element data.

In this embodiment of this application, the detection results of the plurality of different types of sensors are obtained, and the detection results are processed to obtain the traffic element data in the same coordinate system. This can avoid a case in which the lane inference model is excessively complex because the detection results (the detection results include a plurality of different types of data) need to be directly processed, to reduce complexity of the lane inference model used for lane inference.

With reference to the second aspect, in some implementations of the second aspect, the processing the detection results to obtain the traffic element data includes: performing coordinate system conversion on the detection results to obtain the traffic element data.

In this embodiment of this application, coordinate system conversion is performed on the detection results, so that the detection results can be converted into the same coordinate system. This can avoid a case in which the lane inference model is excessively complex because the detection results (the detection results include a plurality of different types of data) need to be directly processed, to reduce complexity of the lane inference model.

With reference to the second aspect, in some implementations of the second aspect, the plurality of different types of sensors include a camera, a laser radar, or a millimeter-wave radar.

With reference to the second aspect, in some implementations of the second aspect, the traffic element data is a contour, a location, and/or a moving track of a traffic element, and the traffic element includes one or more of a lane identification line, another vehicle near the vehicle, a pedestrian, a road, or a traffic light.

With reference to the second aspect, in some implementations of the second aspect, the method further includes: determining an environment perception image based on the traffic element data, where the environment perception image indicates an ambient environment of the vehicle and the traffic element, and the environment perception image includes at least one of a surround view image or a front view image. The performing lane inference based on the traffic element data by using a lane inference model, to obtain a lane of the vehicle comprises: performing lane inference based on the environment perception image by using the lane inference model, to obtain the lane of the vehicle.

In this embodiment of this application, the ambient environment of the vehicle may be intuitively represented by using the environment perception image. In this case, lane inference is performed based on the environment perception image, so that the lane (of the vehicle) obtained through inference may be more accurate.

Optionally, the determining an environment perception image based on the traffic element data includes: superimposing the traffic element on an initial image (for example, a surround view image obtained after one or more frames of perception images collected by the sensor are stitched, or a generated an initial image that is centered on the vehicle and that has a blank environment) based on the traffic element data, to obtain the environment perception image.

With reference to the second aspect, in some implementations of the second aspect, the performing lane inference based on the traffic element data by using a lane inference model, to obtain a lane of the vehicle includes: performing lane inference based on the traffic element data and a driving intention of the vehicle by using the lane inference model, to obtain the lane of the vehicle, where the driving intention of the vehicle indicates a future driving route of the vehicle.

In this embodiment of this application, the driving intention of the vehicle indicates the future driving route of the vehicle. Lane inference is performed based on the traffic element data and the driving intention of the vehicle, so that the lane (of the vehicle) obtained through inference may be more accurate.

With reference to the second aspect, in some implementations of the second aspect, the driving intention of the vehicle is a schematic route diagram of a future driving lane of the vehicle or a vehicle semantic indication, and the vehicle semantic indication indicates at least one of a driving direction, a driving lane, or a driving intersection of the vehicle.

In this embodiment of this application, the driving intention of the vehicle is the schematic route diagram or the vehicle semantic indication, and the future driving route of the vehicle can be intuitively and accurately indicated by using the driving intention of the vehicle.

With reference to the second aspect, in some implementations of the second aspect, the lane of the vehicle is represented by using a center line of the lane and a width of the lane, or the lane of the vehicle is represented by using a road surface cost map.

In this embodiment of this application, the lane of the vehicle can be intuitively and accurately represented by using the center line of the lane and the width of the lane or the road surface cost map.

According to a third aspect, a lane inference apparatus is provided, including:
an obtaining unit, configured to obtain detection results of a plurality of different types of sensors of a vehicle, and perform coordinate system conversion on the detection results, to obtain traffic element data in a same coordinate system; and a lane inference unit, configured to perform lane inference based on the traffic element data by using a preset neural network model, to obtain a lane of the vehicle.

In this embodiment of this application, the traffic element data is data in a same coordinate system. This can avoid a case in which the neural network model is excessively complex because a plurality of different types of data need to be processed, to reduce complexity of the neural network model used for lane inference.

It should be noted that the obtaining the traffic element data detected by the plurality of different types of sensors may include: directly obtaining original data detected by the sensors. In this case, the detected original data is the traffic element data.

Alternatively, the obtaining the traffic element data detected by the plurality of different types of sensors may include: after the detection results detected by the sensors (for example, original data or original images obtained by the sensors) are obtained, processing the detected detection results to obtain processing results. In this case, the processing result obtained after the processing is the traffic element data.

With reference to the third aspect, in some implementations of the third aspect, the obtaining unit is specifically configured to obtain the detection results of the plurality of different types of sensors, and process the detection results to obtain the traffic element data.

In this embodiment of this application, the detection results of the plurality of different types of sensors are obtained, and the detection results are processed to obtain the traffic element data in the same coordinate system. This can avoid a case in which the neural network model is excessively complex because the detection results (the detection results include a plurality of different types of data) need to be directly processed, to reduce complexity of the neural network model used for lane inference.

With reference to the third aspect, in some implementations of the third aspect, the obtaining unit is specifically configured to perform coordinate system conversion on the detection results to obtain the traffic element data.

In this embodiment of this application, coordinate system conversion is performed on the detection results, so that the detection results can be converted into the same coordinate system. This can avoid a case in which the neural network model is excessively complex because the detection results (the detection results include a plurality of different types of data) need to be directly processed, to reduce complexity of the neural network model used for lane inference.

With reference to the third aspect, in some implementations of the third aspect, the plurality of different types of sensors include a camera, a laser radar, or a millimeter-wave radar.

With reference to the third aspect, in some implementations of the third aspect, the traffic element data is a contour, a location, and/or a moving track of a traffic element, and the traffic element includes one or more of a lane identification line, another vehicle near the vehicle, a pedestrian, a road, or a traffic light.

With reference to the third aspect, in some implementations of the third aspect, the apparatus further includes a superimposition unit, configured to determine an environment perception image based on the traffic element data, where the environment perception image indicates an ambient environment of the vehicle and the traffic element, and the environment perception image includes at least one of a surround view image or a front view image. The lane inference unit is specifically configured to perform lane inference based on the environment perception image by using the preset neural network model, to obtain the lane of the vehicle.

In this embodiment of this application, the ambient environment of the vehicle may be intuitively represented by using the environment perception image. In this case, lane inference is performed based on the environment perception image, so that the lane (of the vehicle) obtained through inference may be more accurate.

With reference to the third aspect, in some implementations of the third aspect, the lane inference unit is specifically configured to perform lane inference based on the traffic element data and a driving intention of the vehicle by using the preset neural network model, to obtain the lane of the vehicle, where the driving intention of the vehicle indicates a future driving route of the vehicle.

In this embodiment of this application, the driving intention of the vehicle indicates the future driving route of the vehicle. Lane inference is performed based on the traffic element data and the driving intention of the vehicle, so that the lane (of the vehicle) obtained through inference may be more accurate.

With reference to the third aspect, in some implementations of the third aspect, the driving intention of the vehicle is a schematic route diagram of a future driving lane of the vehicle or a vehicle semantic indication, and the vehicle semantic indication indicates at least one of a driving direction, a driving lane, or a driving intersection of the vehicle.

In this embodiment of this application, the driving intention of the vehicle is the schematic route diagram or the vehicle semantic indication, and the future driving route of the vehicle can be intuitively and accurately indicated by using the driving intention of the vehicle.

With reference to the third aspect, in some implementations of the third aspect, the lane of the vehicle is represented by using a center line of the lane and a width of the lane, or the lane of the vehicle is represented by using a road surface cost map.

In this embodiment of this application, the lane of the vehicle can be intuitively and accurately represented by using the center line of the lane and the width of the lane or the road surface cost map.

According to a fourth aspect, a lane inference model training apparatus is provided, including:
an obtaining unit, configured to obtain detection results of a plurality of different types of sensors of a vehicle, and perform coordinate system conversion on the detection results, to obtain traffic element data in a same coordinate system; a lane inference unit, configured to perform lane inference based on the traffic element data by using a lane inference model, to obtain a lane of the vehicle; and an adjustment unit, configured to adjust a parameter of the lane inference model based on the lane of the vehicle.

In this embodiment of this application, the traffic element data is data in a same coordinate system. This can avoid a case in which the lane inference model is excessively complex because a plurality of different types of data need to be processed, to reduce complexity of the lane inference model.

It should be noted that the obtaining the traffic element data detected by the plurality of different types of sensors may include: directly obtaining original data detected by the sensors. In other words, in this case, the detected original data is the traffic element data.

Alternatively, the obtaining the traffic element data detected by the plurality of different types of sensors may include: after the detection results detected by the sensors (for example, original data or original images obtained by the sensors) are obtained, processing the detected detection results to obtain processing results. In this case, the processing result obtained after the processing is the traffic element data.

With reference to the fourth aspect, in some implementations of the fourth aspect, the obtaining unit is specifically configured to obtain the detection results of the plurality of different types of sensors, and process the detection results to obtain the traffic element data.

In this embodiment of this application, the detection results of the plurality of different types of sensors are obtained, and the detection results are processed to obtain the traffic element data in the same coordinate system. This can avoid a case in which the lane inference model is excessively complex because the detection results (the detection results include a plurality of different types of data) need to be directly processed, to reduce complexity of the lane inference model used for lane inference.

With reference to the fourth aspect, in some implementations of the fourth aspect, the obtaining unit is specifically configured to perform coordinate system conversion on the detection results to obtain the traffic element data.

In this embodiment of this application, coordinate system conversion is performed on the detection results, so that the detection results can be converted into the same coordinate system. This can avoid a case in which the lane inference model is excessively complex because the detection results (the detection results include a plurality of different types of data) need to be directly processed, to reduce complexity of the lane inference model.

With reference to the fourth aspect, in some implementations of the fourth aspect, the plurality of different types of sensors include a camera, a laser radar, or a millimeter-wave radar.

With reference to the fourth aspect, in some implementations of the fourth aspect, the traffic element data is a contour, a location, and/or a moving track of a traffic element, and the traffic element includes one or more of a lane identification line, another vehicle near the vehicle, a pedestrian, a road, or a traffic light.

With reference to the fourth aspect, in some implementations of the fourth aspect, the apparatus further includes a superimposition unit, configured to determine an environment perception image based on the traffic element data, where the environment perception image indicates an ambient environment of the vehicle and the traffic element, and the environment perception image includes at least one of a surround view image or a front view image. The lane inference unit is specifically configured to perform lane inference based on the environment perception image by using the lane inference model, to obtain the lane of the vehicle.

In this embodiment of this application, the ambient environment of the vehicle may be intuitively represented by using the environment perception image. In this case, lane inference is performed based on the environment perception image, so that the lane (of the vehicle) obtained through inference may be more accurate.

With reference to the fourth aspect, in some implementations of the fourth aspect, the lane inference unit is specifically configured to perform lane inference based on the traffic element data and a driving intention of the vehicle by using the lane inference model, to obtain the lane of the vehicle, where the driving intention of the vehicle indicates a future driving route of the vehicle.

In this embodiment of this application, the driving intention of the vehicle indicates the future driving route of the vehicle. Lane inference is performed based on the traffic element data and the driving intention of the vehicle, so that the lane (of the vehicle) obtained through inference may be more accurate.

With reference to the fourth aspect, in some implementations of the fourth aspect, the driving intention of the vehicle is a schematic route diagram of a future driving lane of the vehicle or a vehicle semantic indication, and the vehicle semantic indication indicates at least one of a driving direction, a driving lane, or a driving intersection of the vehicle.

In this embodiment of this application, the driving intention of the vehicle is the schematic route diagram or the vehicle semantic indication, and the future driving route of the vehicle can be intuitively and accurately indicated by using the driving intention of the vehicle.

With reference to the fourth aspect, in some implementations of the fourth aspect, the lane of the vehicle is represented by using a center line of the lane and a width of the lane, or the lane of the vehicle is represented by using a road surface cost map.

In this embodiment of this application, the lane of the vehicle can be intuitively and accurately represented by using the center line of the lane and the width of the lane or the road surface cost map.

According to a fifth aspect, a lane inference apparatus is provided. The apparatus includes a storage medium and a central processing unit, the storage medium may be a nonvolatile storage medium, and the storage medium stores a computer executable program. The central processing unit is connected to the nonvolatile storage medium, and executes the computer executable program to implement the method in any possible implementation of the first aspect.

According to a sixth aspect, a lane inference model training apparatus is provided. The apparatus includes a storage medium and a central processing unit, the storage medium may be a nonvolatile storage medium, and the storage medium stores a computer executable program. The central processing unit is connected to the nonvolatile storage medium, and executes the computer executable program to implement the method in any possible implementation of the second aspect.

According to a seventh aspect, a chip is provided. The chip includes a processor and a data interface, and the processor reads, by using the data interface, an instruction stored in a memory, to perform the method in any possible implementation of the first aspect or the second aspect.

Optionally, in an implementation, the chip may further include the memory. The memory stores instructions. The processor is configured to execute the instructions stored in the memory. When the instructions are executed, the processor is configured to perform the method in any possible implementation of the first aspect or the second aspect.

According to an eighth aspect, a computer-readable storage medium is provided. The computer-readable medium stores program code executed by a device, and the program code includes instructions used to perform the method in any possible implementation of the first aspect or the second aspect.

According to a ninth aspect, a vehicle is provided. The vehicle includes any possible apparatus in the third aspect or the fourth aspect.

In this embodiment of this application, the traffic element data is data in a same coordinate system. This can avoid a case in which the neural network model is excessively complex because a plurality of different types of data need to be processed, to reduce complexity of the neural network model used for lane inference.

### BRIEF DESCRIPTION OF DRAWINGS

FIG. 1 is a schematic diagram of a structure of an automated driving vehicle according to an embodiment of this application;
FIG. 2 is a schematic diagram of a structure of an automated driving system according to an embodiment of this application;
FIG. 3 is s schematic diagram of a structure of a neural network processing unit according to an embodiment of this application;
FIG. 4 is a schematic diagram of application of a cloud-side instruction automated driving vehicle according to an embodiment of this application;
FIG. 5 is a schematic diagram of a structure of an automated driving system according to an embodiment of this application;
FIG. 6 is a schematic block diagram of a road structure recognition module according to an embodiment of this application;
FIG. 7 is a schematic block diagram of a lane inference method according to an embodiment of this application;
FIG. 8 is a schematic flowchart of a lane inference method according to another embodiment of this application;
FIG. 9 is a schematic flowchart of processing a detection result of a sensor according to an embodiment of this application;
FIG. 10 is a schematic flowchart of determining an environment perception image according to an embodiment of this application;
FIG. 11 is a schematic flowchart of determining an environment perception image according to another embodiment of this application;
FIG. 12 is a schematic flowchart of determining a driving intention of a vehicle according to an embodiment of this application;
FIG. 13 is a schematic flowchart of determining a driving intention of a vehicle according to another embodiment of this application;
FIG. 14 is a schematic block diagram of a generated schematic route diagram according to an embodiment of this application;
FIG. 15 is a schematic block diagram of performing lane inference by using a neural network model according to an embodiment of this application;
FIG. 16 is a schematic block diagram of performing lane inference by using a neural network model according to another embodiment of this application;
FIG. 17 is a schematic block diagram of a lane inference model training method according to an embodiment of this application;
FIG. 18 is a schematic block diagram of a lane inference apparatus according to an embodiment of this application;
FIG. 19 is a schematic block diagram of a driving behavior decision model training apparatus according to an embodiment of this application; and
FIG. 20 is a schematic block diagram of an apparatus for an automated driving vehicle according to an embodiment of this application.

### DESCRIPTION OF EMBODIMENTS

The following describes the technical solutions in this application with reference to the accompanying drawings.

The technical solutions in embodiments of this application may be applied to various vehicles. The vehicle may be specifically an internal combustion locomotive, a smart electric vehicle, or a hybrid vehicle, or the vehicle may be a vehicle of another power type, or the like. This is not limited in embodiments of this application.

The vehicle in embodiments of this application may be an automated driving vehicle. For example, the automated driving vehicle may be configured with an automated driving mode. The automated driving mode may be a full automated driving mode, or may be a partial automated driving mode. This is not limited in embodiments of this application.

The vehicle in embodiments of this application may be further configured with another driving mode. The another driving mode may include one or more of a plurality of driving modes such as a motion mode, an economic mode, a standard mode, a snow mode, and a ramp mode. The automated driving vehicle may switch between the automated driving mode and the foregoing plurality of driving mode (of driving the vehicle by a driver). This is not limited in embodiments of this application.

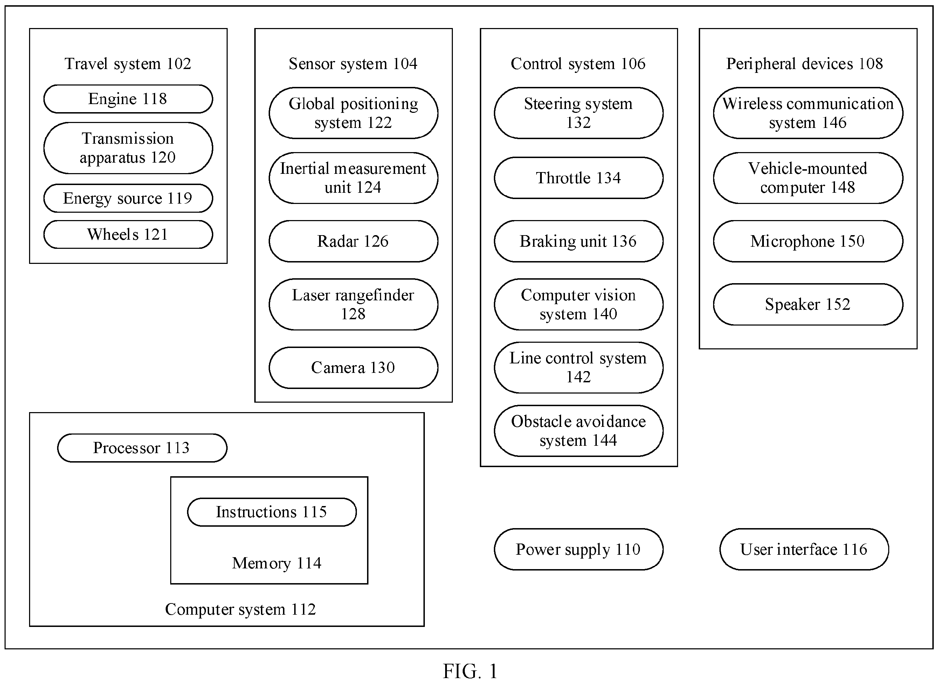

FIG. 1 is a functional block diagram of a vehicle 100 according to an embodiment of this application.

In an embodiment, the vehicle 100 is configured to be in a full automated driving mode or a partial automated driving mode.

For example, the vehicle 100 in an automated driving mode may control the vehicle 100, and may determine current statuses of the vehicle and an ambient environment of the vehicle through manual operations, determine possible behavior of at least one another vehicle in the ambient environment, determine a confidence level corresponding to a possibility that the another vehicle performs the possible behavior, and control the vehicle 100 based on determined information. When the vehicle 100 is in the automated driving mode, the vehicle 100 may be configured to operate without interacting with a person.

The vehicle 100 may include various subsystems, for example, a travel system 102, a sensor system 104, a control system 106, one or more peripheral devices 108, a power supply 110, a computer system 112, and a user interface 116.

Optionally, the vehicle 100 may include more or fewer subsystems, and each subsystem may include a plurality of components. In addition, all the subsystems and components of the vehicle 100 may be interconnected in a wired or wireless manner.

The travel system 102 may include a component providing power to the vehicle 100 for moving. In an embodiment, the travel system 102 may include an engine 118, an energy source 119, a transmission apparatus 120, and wheels/tires 121. The engine 118 may be an internal combustion engine, an electric motor, an air compression engine, or another type of engine combination, for example, a hybrid engine including a gas-oil engine and an electric motor, or a hybrid engine including an internal combustion engine and an air compression engine. The engine 118 converts the energy source 119 into mechanical energy.

Examples of the energy source 119 include gasoline, diesel, another oil-based fuel, propane, another compressed gas-based fuel, ethanol, a solar panel, a battery, and another power source. The energy source 119 may also provide energy to another system of the vehicle 100.

The transmission apparatus 120 may transmit mechanical power from the engine 118 to the wheels 121. The transmission apparatus 120 may include a gearbox, a differential, and a drive shaft.

In an embodiment, the transmission apparatus 120 may further include another component, for example, a clutch. The drive shaft may include one or more shafts that may be coupled to one or more wheels 121.

The sensor system 104 may include several sensors that can sense information about the ambient environment of the vehicle 100.

For example, the sensor system 104 may include a positioning system 122 (the positioning system may be a GPS system, a BeiDou system, or another positioning system), an inertial measurement unit (inertial measurement unit, IMU) 124, a radar 126, a laser rangefinder 128, and a camera 130. The sensor system 104 may further include a sensor (for example, an in-vehicle air quality monitor, a fuel gauge, or an engine oil thermometer) of an internal system of the monitored vehicle 100. Sensor data from one or more of these sensors can be used to detect an object and corresponding features (a position, a shape, a direction, a speed, and the like) of the object. Such detection and recognition are key functions of a safe operation of the autonomous vehicle 100.

The positioning system 122 may be configured to estimate a geographic location of the vehicle 100. The IMU 124 is configured to sense a location and a heading change of the vehicle 100 based on an inertial acceleration. In an embodiment, the IMU 124 may be a combination of an accelerometer and a gyroscope.

The radar 126 may sense an object in the ambient environment of the vehicle 100 through a radio signal. In some embodiments, in addition to sensing an object, the radar 126 may further be configured to sense a speed and/or a moving direction of the object.

The laser rangefinder 128 may sense, by using a laser, an object in an environment in which the vehicle 100 is located. In some embodiments, the laser rangefinder 128 may include one or more laser sources, a laser scanner, one or more detectors, and another system component.

The camera 130 may be configured to capture a plurality of images of the ambient environment of the vehicle 100. The camera 130 may be a static camera or a video camera.

The control system 106 controls operations of the vehicle 100 and components of the vehicle 100. The control system 106 may include various components, including a steering system 132, a throttle 134, a braking unit 136, a sensor fusion algorithm 138, a computer vision system 140, a route control system 142, and an obstacle avoidance system 144.

The steering system 132 may be operated to adjust a moving direction of the vehicle 100. For example, in an embodiment, the steering system 132 may be a steering wheel system.

The throttle 134 is configured to control an operating speed of the engine 118 and further control a speed of the vehicle 100.

The braking unit 136 is configured to control the vehicle 100 to decelerate. The braking unit 136 may use friction to slow down the wheels 121. In another embodiment, the braking unit 136 may convert kinetic energy of the wheels 121 into a current. Alternatively, the braking unit 136 may reduce a rotational speed of the wheels 121 in another form to control the speed of the vehicle 100.

The computer vision system 140 may be operated to process and analyze an image captured by the camera 130, to recognize an object and/or a feature in the ambient environment of the vehicle 100. The object and/or the feature may include a traffic signal, a road boundary, and an obstacle. The computer vision system 140 may use an object recognition algorithm, a structure from motion (Structure from Motion, SFM) algorithm, video tracking, and another computer vision technology. In some embodiments, the computer vision system 140 may be configured to draw a map for an environment, track an object, estimate a speed of the object, and the like.

The route control system 142 is configured to determine a driving route of the vehicle 100. In some embodiments, the route control system 142 may determine the driving route of the vehicle 100 with reference to data from the sensor 138, the GPS 122, and one or more predetermined maps.

The obstacle avoidance system 144 is configured to recognize, evaluate, and avoid or bypass, in another manner, a potential obstacle in an environment of the vehicle 100.

Certainly, in an example, the control system 106 may add or alternatively include components in addition to those shown and described. Alternatively, the control system 106 may delete some of the foregoing components.

The vehicle 100 interacts with an external sensor, another vehicle, another computer system, or a user by using the peripheral device 108. The peripheral device 108 may include a wireless communication system 146, a vehicle-mounted computer 148, a microphone 150, and/or a speaker 152.

In some embodiments, the peripheral device 108 provides a means for a user of the vehicle 100 to interact with the user interface 116. For example, the vehicle-mounted computer 148 may provide information to the user of the vehicle 100. The user interface 116 may further operate the vehicle-mounted computer 148 to receive an input from the user. The vehicle-mounted computer 148 may perform an operation by using a touchscreen. In another case, the peripheral device 108 may provide a means for the vehicle 100 to communicate with another device located in the vehicle. For example, the microphone 150 may receive audio (for example, a voice command or another audio input) from the user of the vehicle 100. Likewise, the speaker 152 may output audio to the user of the vehicle 100.

The wireless communication system 146 may wirelessly communicate with one or more devices directly or through a communication network. For example, the wireless communication system 146 may perform communication through a 3G cellular network such as CDMA, EVD0, or GSM/GPRS, perform communication through a 4G cellular network such as LTE, or perform communication through a 5G cellular network. The wireless communication system 146 may communicate with a wireless local area network (wireless local area network, WLAN) by using Wi-Fi. In some embodiments, the wireless communication system 146 may directly communicate with a device by using an infrared link, Bluetooth, or ZigBee. Other wireless protocols, for example, various vehicle communication systems such as the wireless communication system 146, may include one or more dedicated short range communications (dedicated short range communications, DSRC) devices, which may include public and/or private data communication between vehicles and/or roadside stations.

The power supply 110 may provide power to various components of the vehicle 100. In an embodiment, the power supply 110 may be a rechargeable lithium-ion or lead-acid battery. One or more battery packs of such batteries may be configured as the power supply to supply power to the components of the vehicle 100. In some embodiments, the power supply 110 and the energy source 119 may be implemented together, for example, in some pure electric vehicles.

Some or all of functions of the vehicle 100 are controlled by the computer system 112. The computer system 112 may include at least one processor 113. The processor 113 executes instructions 115 stored in a nontransient computer-readable medium such as a data storage apparatus 114. The computer system 112 may alternatively be a plurality of computing devices that control an individual component or a subsystem of the vehicle 100 in a distributed manner.

The processor 113 may be any conventional processor, for example, a commercially available CPU. Alternatively, the processor may be a dedicated device such as an ASIC or another hardware-based processor. Although FIG. 1 functionally illustrates the processor, the memory, and other components of a computer 110 in a same block, a person of ordinary skill in the art should understand that the processor, the computer, or the memory may actually include a plurality of processors, computers, or memories in a same physical housing. For example, the memory may be a hard disk drive, or another storage medium located in a housing different from that of the computer 110. Thus, it is understood that a reference to the processor or the computer includes a reference to a set of processors or computers or memories that may or may not operate in parallel. Different from using a single processor to perform the steps described herein, some components, such as a steering component and a deceleration component, each may include a respective processor that performs only computation related to a component-specific function.

In various aspects described herein, the processor may be located far away from the vehicle and wirelessly communicate with the vehicle. In another aspect, some processes described herein are performed on a processor disposed inside the vehicle, while others are performed by a remote processor, including performing steps necessary for single manipulation.

In some embodiments, the data storage apparatus 114 may include the instruction 115 (for example, program logic), and the instruction 115 may be executed by the processor 113 to perform various functions of the vehicle 100, including the functions described above. The data storage apparatus 114 may also include additional instructions, for example, instructions for sending data to, receiving data from, interacting with, and/or controlling one or more of the travel system 102, the sensor system 104, the control system 106, and the peripheral device 108.

In addition to the instructions 115, the data storage apparatus 114 may further store data, such as a road map, route information, a location, a direction, a speed, and other vehicle data of the vehicle, and other information. Such information may be used by the vehicle 100 and the computer system 112 when the vehicle 100 operates in an autonomous mode, a semi-autonomous mode, and/or a manual mode.

The user interface 116 is configured to provide information to or receive information from the user of the vehicle 100. Optionally, the user interface 116 may include one or more input/output devices in a set of peripheral devices 108, for example, the wireless communication system 146, the vehicle-mounted computer 148, the microphone 150, and the speaker 152.

The computer system 112 may control the functions of the vehicle 100 based on inputs received from various subsystems (for example, the travel system 102, the sensor system 104, and the control system 106) and from the user interface 116. For example, the computer system 112 may access and use input from the control system 106 to control the steering unit 132 to avoid an obstacle detected by the sensor system 104 and the obstacle avoidance system 144. In some embodiments, the computer system 112 may be operated to provide control over many aspects of the vehicle 100 and the subsystems of the vehicle 100.

Optionally, one or more of the foregoing components may be installed separately from or associated with the vehicle 100. For example, the data storage apparatus 114 may exist partially or completely separate from the vehicle 100. The foregoing components may be communicatively coupled together in a wired and/or wireless manner.

Optionally, the foregoing components are merely examples. During actual application, components in the foregoing modules may be added or removed based on an actual requirement. FIG. 1 should not be construed as a limitation on this embodiment of this application.

An automated driving vehicle traveling on a road, for example, the vehicle 100, may recognize an object in an ambient environment of the automated driving vehicle, to determine to adjust a current speed. The object may be another vehicle, a traffic control device, or another object of another type. In some examples, each recognized object may be considered independently, and based on features of each object, such as a current speed of the object, an acceleration of the object, and a spacing between the object and the vehicle, may be used to determine the speed to be adjusted by the automated driving vehicle.

Optionally, the automated driving vehicle 100 or a computing device (such as the computer system 112, the computer vision system 140, and the data storage apparatus 114 in FIG. 1) associated with the automated driving vehicle 100 may predict behavior of the identified object based on a characteristic of the identified object and a status (for example, traffic, rain, or ice on a road) of the ambient environment. Optionally, identified objects depend on behavior of each other, and therefore all the identified objects may be considered together to predict behavior of a single identified object. The vehicle 100 can adjust the speed of the vehicle based on the predicted behavior of the identified object. In other words, the automated driving vehicle can determine, based on the predicted behavior of the object, a specific stable state (for example, acceleration, deceleration, or stop) to which the vehicle needs to be adjusted. In this process, another factor, for example, a horizontal location of the vehicle 100 on a road on which the vehicle 100 moves, a curvature of the road, or proximity between static and dynamic objects, may also be considered, to determine the speed of the vehicle 100.

In addition to providing an instruction for adjusting the speed of the automated driving vehicle, the computing device may provide an instruction for modifying a steering angle of the vehicle 100, so that the automated driving vehicle can follow a given track and/or maintain a safe horizontal distance and a safe vertical distance from an object (for example, a car on a neighboring lane of the road) near the autonomous vehicle.

The vehicle 100 may be a car, a truck, a motorcycle, a bus, a boat, an airplane, a helicopter, a lawn mower, a recreational vehicle, a playground vehicle, a construction device, a trolley, a golf cart, a train, a handcart, or the like. This is not specifically limited in this embodiment of this application.

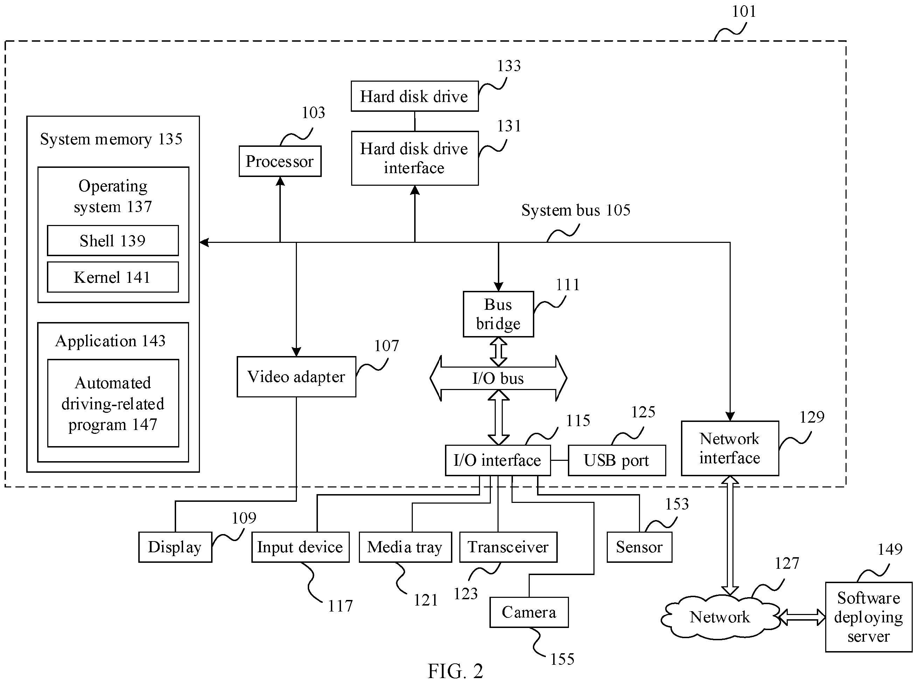

FIG. 2 is a schematic diagram of an automated driving system according to an embodiment of this application.

The automated driving system shown in FIG. 2 includes a computer system 101. The computer system 101 includes a processor 103, and the processor 103 is coupled to a system bus 105. The processor 103 may be one or more processors, and each processor may include one or more processor cores. A video adapter (video adapter) 107 is further included, and the video adapter may drive a display 109, and the display 109 is coupled to the system bus 105. The system bus 105 is coupled to an input/output (I/O) bus 113 through a bus bridge 111. An I/O interface 115 is coupled to the I/O bus. The I/O interface 115 communicates with a plurality of I/O devices, for example, an input device 117 (for example, a keyboard, a mouse, and a touchscreen) and a media tray (media tray) 121 (for example, a CD-ROM and a multimedia interface). A transceiver 123 (which can send and/or receive a radio communication signal), a camera 155 (which can capture static and dynamic digital video images), and an external USB interface 125 are further included. Optionally, an interface connected to the I/O interface 115 may be a USB interface.

The processor 103 may be any conventional processor, including a reduced instruction set computer (reduced instruction set computer, RISC) processor, a complex instruction set computer (complex instruction set computer, CISC) processor, or a combination thereof. Optionally, the processor may be a dedicated apparatus such as an application-specific integrated circuit (application-specific integrated circuit, ASIC). Optionally, the processor 103 may be a neural network processor or a combination of the neural network processor and the foregoing conventional processor.

Optionally, in various embodiments described herein, the computer system 101 may be located away from an automated driving vehicle, and may wirelessly communicate with the automated driving vehicle. In another aspect, some of processes described herein are performed on a processor disposed in the automated driving vehicle, and others are performed by a remote processor, including taking an action required to perform a single manipulation.

The computer 101 may communicate with a software deploying server 149 through a network interface 129. The network interface 129 is a hardware network interface, for example, a network adapter. A network 127 may be an external network such as the internet, or an internal network such as the Ethernet or a virtual private network (virtual private network, VPN). Optionally, the network 127 may alternatively be a wireless network, for example, a Wi-Fi network or a cellular network.

A hard disk drive interface is coupled to the system bus 105. The hardware drive interface is connected to a hard disk drive. A system memory 135 is coupled to the system bus 105. Data running in the system memory 135 may include an operating system 137 and an application 143 of the computer 101.

The operating system includes a shell (shell) 139 and a kernel (kernel) 141. The shell is an interface between a user and the kernel (kernel) of the operating system. The shell is an outermost layer of the operating system. The shell manages interaction between the user and the operating system: waiting for an input from the user, interpreting the input from the user to the operating system, and processing various output results of the operating system.

The kernel 141 includes parts of the operating system that are used for managing a memory, a file, a peripheral device, and a system resource. When directly interacting with hardware, the kernel of the operating system usually runs a process, provides inter-process communication, and provides functions such as CPU time slice management, interrupt, memory management, and I/O management.

The application 143 includes a program related to control of vehicle automated driving, for example, a program for managing interaction between the automated driving vehicle and an obstacle on a road, a program for controlling a route or a speed of the automated driving vehicle, and a program for controlling interaction between the automated driving vehicle and another automated driving vehicle on a road. The application 143 also exists in a system of the deploying server 149. In one embodiment, when the application 143 needs to be executed, the computer system 101 may download the application 143 from the deploying server 14.

A sensor 153 is associated with the computer system 101. The sensor 153 is configured to detect an ambient environment of the computer 101. For example, the sensor 153 can detect animals, vehicles, obstacles, pedestrian crosswalks, and the like. Further, the sensor can detect ambient environments of the animals, the vehicles, the obstacles, or the pedestrian crosswalks. For example, the sensor can detect the ambient environment of animals such as other animals in the ambient environment, a weather condition, and brightness of the ambient environment. Optionally, if the computer 101 is located in the automated driving vehicle, the sensor may be a camera, an infrared sensor, a chemical detector, a microphone, or the like.

For example, the application 143 may perform lane inference based on information about the ambient environment detected by the sensor 153, to obtain a future driving lane (or a drivable lane) of the vehicle. In this case, route planning may be performed on the automated driving vehicle based on the future driving lane, to determine a control value of the vehicle, so as to implement automated driving of the vehicle.

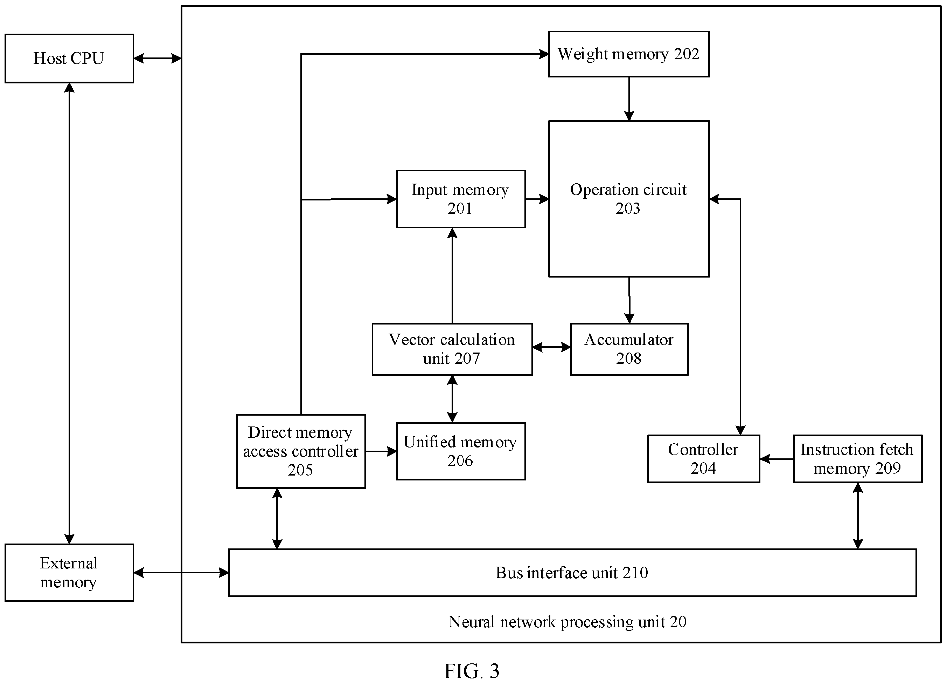

FIG. 3 is a schematic diagram of a hardware architecture of a chip according to an embodiment of this application. The chip includes a neural network processing unit 20. The chip may be in the processor 103 shown in FIG. 2, and is configured to perform lane inference based on environment information. In this embodiment of this application, an algorithm of each layer in a pre-trained neural network may be implemented in the chip shown in FIG. 3.

Alternatively, a lane inference method in embodiments of this application may be implemented in the chip shown in FIG. 3. The chip may be a same chip as a chip implementing the foregoing pre-trained neural network, or the chip may be a different chip from a chip implementing the foregoing pre-trained neural network. This is not limited in this embodiment of this application.

A neural-network processing unit NPU 50, as a coprocessor, is mounted to a host CPU (host CPU), and the host CPU allocates a task. A core part of the NPU is an operation circuit 50. An operation circuit 503 is controlled by a controller 504 to extract matrix data in a memory and perform a multiplication operation.

In some implementations, the operation circuit 203 includes a plurality of processing engines (process engines, PEs). In some implementations, the operation circuit 203 is a two-dimensional systolic array. The operation circuit 203 may alternatively be a one-dimensional systolic array or another electronic circuit that can perform arithmetical operations such as multiplication and addition. In some implementations, the operation circuit 203 is a general-purpose matrix processor.

For example, it is assumed that there is an input matrix A, a weight matrix B, and an output matrix C. The operation circuit fetches data corresponding to the matrix B from a weight memory 202, and buffers the data on each PE in the operation circuit. The operation circuit fetches data of the matrix A from an input memory 201 to perform a matrix operation on the matrix B, to obtain a partial result or a final result of the matrix, which is stored in an accumulator (accumulator) 208.

A vector calculation unit 207 may perform further processing such as vector multiplication, vector addition, an exponent operation, a logarithm operation, or value comparison on an output of the operation circuit. For example, the vector calculation unit 207 may be configured to perform network calculation, such as pooling (pooling), batch normalization (batch normalization), or local response normalization (local response normalization), at a nonconvolution/non-FC layer in the neural network.

In some implementations, the vector calculation unit 207 can store, in a unified cache 206, an output vector that has been processed. For example, the vector calculation unit 207 may apply a non-linear function to the output of the operation circuit 203, for example, to a vector of an accumulated value, so as to generate an activation value. In some implementations, the vector calculation unit 207 generates a normalized value, a combined value, or both. In some implementations, the output vector that has been processed can be used as an activation input of the operation circuit 203, for example, to be used in a subsequent layer in the neural network.

The unified memory 206 is configured to store input data and output data.

For weight data, a direct memory access controller (direct memory access controller, DMAC) 205 transfers input data in an external memory into the input memory 201 and/or the unified memory 206, stores weight data in the external memory into the weight memory 202, and stores data in the unified memory 206 into the external memory.

A bus interface unit (bus interface unit, BIU) 210 is configured to implement interaction between the host CPU, the DMAC, and an instruction fetch buffer 209 through a bus.

The instruction fetch buffer (instruction fetch buffer) 209 connected to the controller 204 is configured to store instructions to be used by the controller 204.

The controller 204 is configured to invoke the instructions buffered in the instruction fetch buffer 209, to control a working process of the operation accelerator.

Generally, the unified memory 206, the input memory 201, the weight memory 202, and the instruction fetch buffer 209 each are an on-chip (On-Chip) memory. The external memory is a memory outside the NPU. The external memory may be a double data rate synchronous dynamic random access memory (double data rate synchronous dynamic random access memory, DDR SDRAM), a high bandwidth memory (high bandwidth memory, HBM), or another readable and writable memory.

The computer system 112 may also receive information from or transfer information to other computer systems. Alternatively, the sensor data collected by the sensor system 104 of the vehicle 100 may be transferred to another computer for processing.

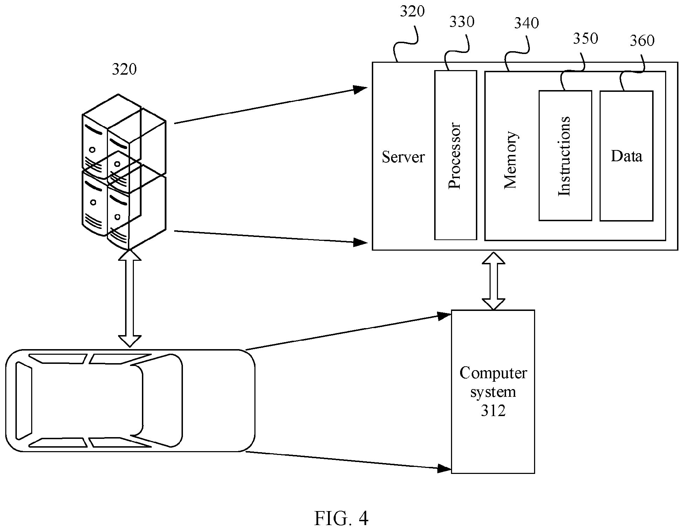

For example, as shown in FIG. 4, data from a computer system 312 may be transferred via a network to a cloud-side server 320 for further processing. The network and an intermediate node may include various configurations and protocols, including Internet, World Wide Web, an intranet, a virtual private network, a wide area network, a local area network, a dedicated network using a proprietary communication protocol of one or more companies, Ethernet, Wi-Fi, HTTP, and various combinations thereof. Such communication may be performed by any device that can transmit data to and from other computers, such as a modem or a wireless interface.

In an example, the server 320 may include a server such as a load balancing server cluster having a plurality of computers, and exchanges information with different nodes of the network for the purpose of receiving, processing, and transmitting data from the computer system 312. The server may be configured similar to the computer system 312, and has a processor 330, a memory 340, instructions 350, and data 360.

For example, the data 360 of the server 320 may include map information and/or information related to a road condition around the automated driving vehicle. For example, the server 320 may receive, detect, store, update, and transmit the information related to the road condition around the automated driving vehicle.

For example, the map information may be a high-precision map, and the map information may include prestored lane line information (for example, a lane identification line).

For another example, the information related to the road condition around the automated driving vehicle includes location information and motion parameter information of another vehicle that has an intersection point with a predicted driving path of the automated driving vehicle, for example, current location information of the another vehicle, speed information of the another vehicle, and predicted driving track information of the another vehicle.

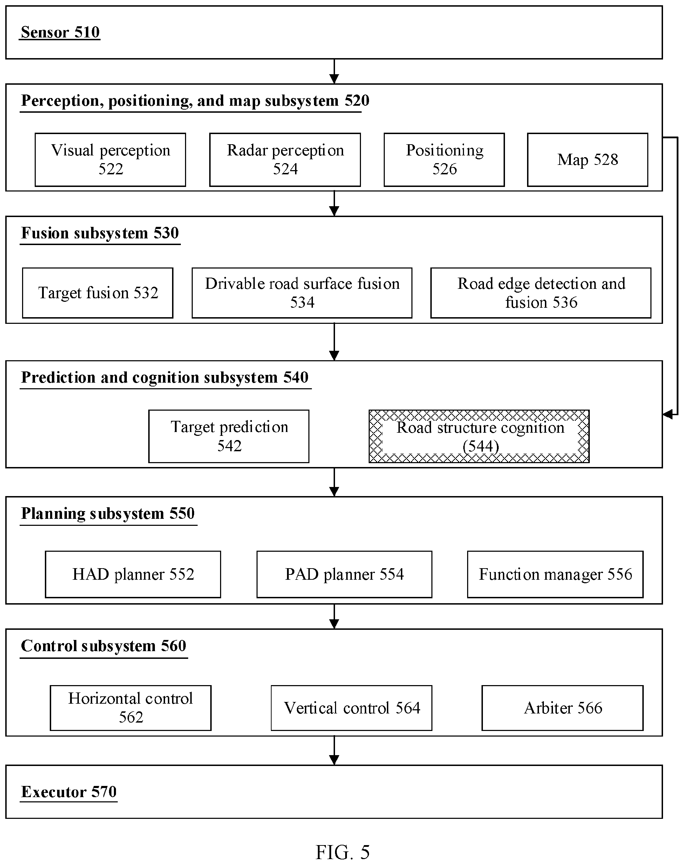

FIG. 5 is an example block diagram of a structure of an automated driving system 500 according to an embodiment of this application. As shown in FIG. 5, the automated driving system 500 may include a sensor 510, a perception, positioning, and map subsystem 520, a fusion subsystem 530, a prediction and cognition subsystem 540, a planning subsystem 550, a control subsystem 560, and an executor 570.

It should be noted that the automated driving system 500 shown in FIG. 5 is merely an example rather than a limitation. A person of ordinary skill in the art may understand that the automated driving system 500 may include more or fewer modules or subsystems (or units). This is not limited in this embodiment of this application.

The sensor 510 may be configured to sense an object outside a vehicle (for example, an automated driving vehicle), and transmit data obtained through sensing to the perception and positioning map subsystem 520. The sensor 510 may include a sensor, for example, a camera, a millimeter-wave radar, a laser radar, and an ultrasonic radar.

The perception, positioning, and map subsystem 520 may be configured to obtain traffic element data in an environment, and provide positioning of the vehicle (for example, the automated driving vehicle) and topology information of a road on which the vehicle is located.

As shown in FIG. 5, the perception, positioning, and map subsystem 520 includes a visual perception module 522, a radar perception module 524, a positioning module 526, and a map module 526. The visual perception module 522 may be configured to detect a lane identification line, a moving vehicle, a drivable area, and a traffic identifier. The radar perception module 524 may be configured to detect a vehicle, a road edge, and a drivable area. The positioning module 526 may be configured to implement global positioning of the vehicle. The map module 526 may be configured to obtain a surrounding road topology.

The fusion subsystem 530 may be configured to fuse output results of a plurality of perception modules, to implement more accurate moving object detection, drivable area detection, and road edge detection.

As shown in FIG. 5, the fusion subsystem 530 includes a target fusion module 532, a drivable road surface fusion module 534, and a road edge detection and fusion module 536. The target fusion module 532 may be configured to fuse and track a visual perception target and a radar detection target. The drivable road surface fusion module 534 may be configured to fuse and track a visual detection drivable area and a radar detection drivable area. The road edge detection and fusion module 536 may be configured to fuse and track a visual semantic segmentation result and a radar detection road edge.

The prediction and cognition subsystem 540 may be configured to enable further understanding and inferring of the environment.

As shown in FIG. 5, the prediction and cognition subsystem 540 includes a target prediction module 542 and a road structure cognition module 544. The target prediction module 542 may be configured to predict future motion of a moving target. The road structure cognition module 544 may be configured to perform lane inference to obtain a future driving lane (or a drivable lane) of the automated driving vehicle.

The planning subsystem 550 may be configured to plan an ego vehicle driving policy based on an obtained environment detection result and an obtained environment cognition result.

As shown in FIG. 5, the planning subsystem 550 includes a highly automated driving (highly automated driving, HAD) planner 552, a partial automated driving (partial automated driving, PAD) planner 554, and a function manager 556. The HAD planner 552 may be configured to perform planning by using a highly automated driving function, and the automated driving function includes a plurality of automated driving functions. The PAD planner 554 may be configured for a partial automated driving function, for example, adaptive cruise. The function manager 556 may be configured to enable and switch the HAD function and the PAD function.

The control subsystem 560 is configured to calculate a vehicle body control value based on a planning result, to send a target control value instruction to a chassis electronic control system.

As shown in FIG. 5, the control subsystem 560 includes a horizontal control module 562, a vertical control module 564, and an arbiter 566. The horizontal control module 562 may be configured to calculate a steering system control value for implementing a target track, the vertical control module 564 may be configured to calculate a power and a braking system control value for implementing a target speed curve, and the arbiter 566 may be configured to implement arbitration of a multifunctional control value.

The executor 570 may be configured to implement a control instruction sent by the control subsystem, and implement expected steering and acceleration/deceleration.

It should be noted that the automated driving system 500 shown in FIG. 5 is merely an example rather than a limitation. The automated driving system 500 may include more or fewer systems, modules, submodels, or units. This is not limited in this embodiment of this application.

In the conventional technology, the road structure cognition module 544 in FIG. 5 may perform lane inference by using a plurality of solutions, which are specifically as follows.

**Solution 1:**
performing lane inference based on detection of a lane identification line, to be specific, detecting a lane identification line in an image by using a method such as machine vision or image detection, and determining a future driving lane (or a drivable lane) of the automated driving vehicle based on the detected lane identification line.

However, the method relies heavily on an actual lane identification line and a real-time environmental condition.

For example, under a current technical condition, lane identification line detection is prone to fail in the following several cases:
1. The lane line is worn out or lost.
2. An illumination condition is poor. For example, there is shadow interference such as backlight or railing shadow.
3. Pavement markings are complex, for example, with text or a guide marking line at a ramp.

**Solution 2:**
performing lane inference based on a high-precision map, to be specific, querying the high-precision map to obtain lane identification line information prestored in the high-precision map, and determining a future driving lane (or a drivable lane) of the automated driving vehicle based on the lane identification line information.

However, the method relies heavily on making, updating, and maintaining of the high-precision map, and requires high-precision positioning, to obtain accurate and reliable lane information.

**Solution 3:**
To compensate for disadvantages in Solution 1 and Solution 2, a method for performing lane inference based on a surrounding vehicle is proposed in Solution 3. To be specific, a vehicle of interest is filtered out based on a preset condition, a driving track of the vehicle of interest is determined after the vehicle of interest is filtered out, and a future driving lane (or a drivable lane) of the automated driving vehicle is determined based on the driving track of the vehicle of interest. The preset condition may include a distance range of a vehicle, a driving track curvature of a vehicle, an observation cycle of a vehicle, and the like.

However, the method relies heavily on the surrounding vehicle (that is, the vehicle of interest). For example, when there is no front vehicle, the solution cannot be implemented. When driving behavior of the surrounding vehicle does not comply with a traffic rule (for example, the surrounding vehicle does not drive according to an indication of a lane identification line), a future driving lane determined based on the driving track of the surrounding vehicle may conflict with a driving track of another vehicle. This may cause a driving risk.

**Solution 4:**
performing an end-to-end automated driving solution with reference to real-time perception and a driving intention, to be specific, first training a neural network model in an offline environment based on collected training data, to obtain a neural network model that can be used for end-to-end automated driving; and then, in an online phase, using local perception (that is, local environment perception) and the driving intention as input to calculate a control value of vehicle control (that is, controlling the automated driving vehicle) by using the neural network model obtained through training in the offline environment.

However, in this application, it is found through research and analysis that, because local perception in the method (Solution 4) includes only image information collected by a camera, a generalization capability of a light condition, a road surface type, and the like, road surface cognition, matching between a road surface and a driving intention, and processing of a dynamic obstacle and a static obstacle all rely on the same neural network model. As a result, the neural network model (used for end-to-end automated driving) is excessively complex.

In addition, an input of the method is the image information (and the driving intention) collected by the camera, and an output is a vehicle control result (for example, the vehicle control result may be a control value for the automated driving vehicle). The neural network model obtained through training relies heavily on the camera that collects an image, a size of the controlled vehicle (that is, the automated driving vehicle), and the like. For example, if an installation position of a camera or a vehicle is changed, training data needs to be re-collected, and the neural network model is trained based on the re-collected training data. In addition, because the output of the method is the vehicle control result, and no future driving lane (or no drivable lane) of the automated driving vehicle is output, decision control logic is untraceable when automated driving is performed by using the method.

Therefore, this application proposes a lane inference method. Traffic element data that is detected by different types of sensors and that is located in a same coordinate system is obtained, and lane inference is performed based on the traffic element data, to obtain a lane of a vehicle. This helps reduce complexity of a neural network model used for lane inference.

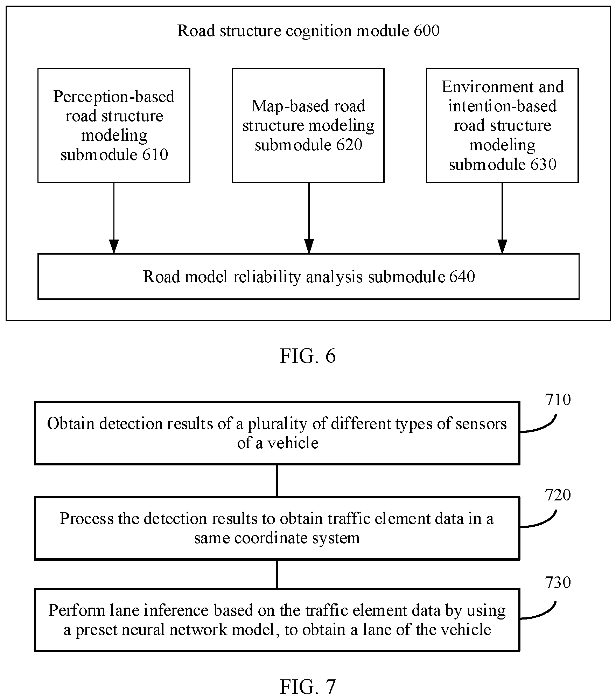

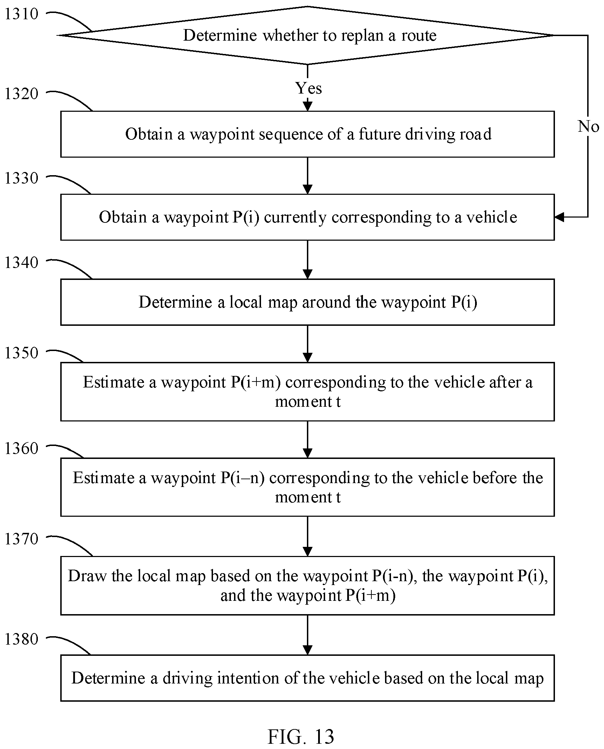

The following describes in detail lane inference methods in embodiments of this application with reference to FIG. 6 to FIG. 16.

FIG. 6 is a schematic diagram of a structure of a road structure recognition module 600 according to an embodiment of this application.

The road structure cognition module 600 in FIG. 6 may be the road structure cognition module 544 in FIG. 5, and the road structure cognition module 600 may include a plurality of submodules or units.

As shown in FIG. 6, the road structure cognition module 600 may include a perception-based road structure modeling submodule 610, a map-based road structure modeling submodule 620, an environment and intention-based road structure modeling submodule 630, and a road model reliability analysis submodule 640.

The perception-based road structure modeling submodule 610 may be configured to implement Solution 1 in the conventional technology, that is, perform lane inference based on a lane identification line. The module 610 may be mainly applied in a scenario in which the lane identification line is clear and a line type, a curvature, and the like of the lane identification line are within a perception range (of a machine vision model or an image detection model).

The map-based road structure modeling submodule 620 may be configured to implement Solution 2 in the conventional technology, that is, perform lane inference based on a high-precision map. The module 620 may be mainly applied for high-precision positioning and the high-precision map.

The environment and intention-based road structure modeling submodule 630 may be configured to implement the lane inference methods in embodiments of this application. The method does not absolutely rely on the lane identification line, high-precision positioning, or the high-precision map. Therefore, the module 630 may be applied in all scenarios.

The road model reliability analysis submodule 640 may be configured to analyze road models (for example, a future driving lane or a drivable lane of an automated driving vehicle) output by the module 610, the module 620, and the module 630, evaluate the road models output by the modules, determine reliability levels of the road models, and output a road model with a highest reliability level and the reliability level of the road model.

It should be noted that the future driving lane (or the drivable lane) of the automated driving vehicle in this embodiment of this application may be shape information of the lane, for example, a geometric shape of the lane, or may be cost information of the lane, for example, a cost map (or a cost grid map) of the lane, or may be other information that can describe the lane. This is not limited in this embodiment of this application.

FIG. 7 is a schematic flowchart of a lane inference method 700 according to this embodiment of this application. The method 700 shown in FIG. 7 may be performed by the processor 113 in the vehicle 100 in FIG. 1, or may be performed by the processor 103 in the automated driving system in FIG. 2, or may be performed by the processor 320 in the server 320 in FIG. 4.

The method 700 shown in FIG. 7 may include step 710 and step 720. It should be understood that the method 700 shown in FIG. 7 is merely an example rather than a limitation, and the method 700 may include more or fewer steps. This is not limited in this embodiment of this application. The following separately describes these steps in detail.

S710: Obtain detection results of a plurality of different types of sensors of a vehicle.

The plurality of different types of sensors may include a camera, a laser radar, or a millimeter-wave radar, or the plurality of different types of sensors may include another sensor. This is not limited in this embodiment of this application.

S720: Process the detection results to obtain traffic element data in a same coordinate system.

The traffic element data may be data in a same coordinate system.

Optionally, the traffic element data may be a type, a contour, a location, and/or a moving track of a traffic element, and the traffic element may be a stationary object (stationary object), or the traffic element may be a moving object (moving object).

For example, the traffic element may include one or more of a lane identification line, another vehicle near the vehicle, a pedestrian, a road (for example, a road or a road edge near the vehicle), or a traffic light.

It should be understood that the obtaining traffic element data in a same coordinate system may include: directly obtaining original data detected by the sensor. In this case, the detected original data is the traffic element data.

Alternatively, the obtaining traffic element data in a same coordinate system may include: after the detection result detected by the sensor (for example, original data or an original image obtained by the sensors) is obtained, processing the detected detection result to obtain a processing result. In this case, the processing result obtained after processing is the traffic element data.

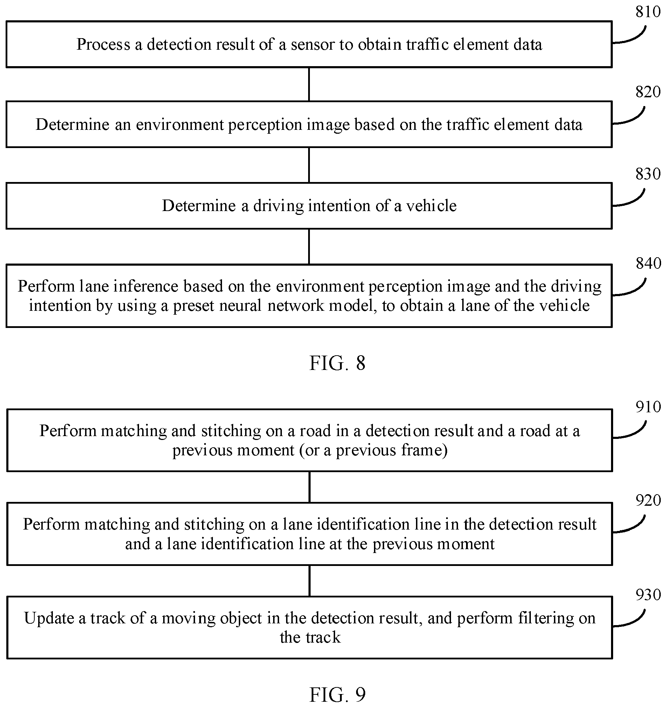

It should be noted that processing the detected detection result (for example, the detection result of the sensor) herein may refer to S810 in a method 800 in FIG. 8.

Specifically, at least one of the following processing manners of the detection result may be included.

Processing manner 1:
performing coordinate system conversion on the detection result (for example, the original data or the original image obtained by the sensor).

For example, ranging data detected by the laser radar may be converted into a specified coordinate system, or the ranging data may be converted between a plurality of coordinate systems. The coordinate system described herein may include a vehicle body coordinate system, a relative coordinate system, an image coordinate system, or the like, or may include another commonly used coordinate system. This is not limited herein.

Processing manner 2:
determining (or recognizing) the type of the traffic element (for example, the lane identification line, the another vehicle near the vehicle, the pedestrian, the road, or the traffic light) included in the detection result. In other words, it may be considered that the traffic element data includes the type of the traffic element.

For example, a traffic element included in an image obtained by the camera may be recognized.

Processing manner 3:
determining the contour, the location, and/or the moving track of the traffic element based on the detection result (corresponding to the detection result).

For example, the detection result (or the traffic element included in the detection result of the sensor) may be processed by using an existing algorithm, to determine the contour, the location, and/or the moving track of the traffic element.

The contour of the traffic element may include information that can describe a contour feature of the traffic element, for example, a geometric feature of the traffic element or a center line of the traffic element. This is not limited in this embodiment of this application.

For specific implementations of the foregoing processing manners, refer to the conventional technology. Details are not described in this embodiment of this application.

It should be understood that the foregoing method for processing the detected detection result (for example, the detection result of the sensor) is merely an example rather than a limitation. Other processing (for example, filtering the moving track of the traffic element) may be further performed on the detection result. This is not limited in this embodiment of this application.

In this embodiment of this application, the method 700 may further include S712.

S712: Determine an environment perception image based on the traffic element data.

The environment perception image may indicate an ambient environment of the vehicle, and the environment perception image may include at least one of a surround view image or a front view image.

For example, the environment perception image may be a world model (world model). In the field of automated driving, the world model may refer to a summary of environment perception information of the vehicle.

Optionally, the traffic element may be superimposed on the environment perception image based on the traffic element data.

For example, the traffic element data may be converted into a same coordinate system, and then the traffic element data is superimposed on the environment perception image based on a location and a field of view of each traffic element relative to the vehicle, to obtain a surround view image or a front view image of the vehicle.

For a specific stitching algorithm, refer to the conventional technology. Details are not described in this embodiment of this application.

S730: Perform lane inference based on the traffic element data by using a preset neural network model, to obtain a lane of the vehicle.

Optionally, when the environment perception image is determined based on the traffic element data in S720, lane inference may be further performed based on the environment perception image by using the preset neural network model, to obtain the lane of the vehicle.

The neural network model may be obtained after training based on the traffic element data (collected offline) and/or a driving intention (intention). For a specific training method, refer to the conventional technology. Details are not described herein.

Optionally, the driving intention of the vehicle may be a schematic route diagram of a future driving lane of the vehicle or a vehicle semantic indication, and the vehicle semantic indication indicates at least one of a driving direction, a driving lane, or a driving intersection of the vehicle.

For example, the semantic indication may include "turn left", "turn right", "go straight", and "stop", or the semantic indication may include "stay in the right two lanes", "stay in the left lane", "take the second exit", and the like.

It should be understood that the foregoing example is merely an example rather than a limitation, and a manner (or a form) of the semantic indication is not limited in this embodiment of this application.

In addition, a method for determining the driving intention is not limited in this embodiment of this application. For a specific method, refer to the conventional technology. Details are not described herein.

In this embodiment of this application, lane inference may be further performed based on the traffic element data and the driving intention of the vehicle by using the preset neural network model, to obtain the lane of the vehicle, where the driving intention of the vehicle indicates a future driving route of the vehicle.

Optionally, the lane of the vehicle may be represented by using a center line of the lane and a width of the lane; or the lane of the vehicle may be represented by using a road surface cost map of the lane of the vehicle; or the lane of the vehicle may be represented by another lane in the conventional technology. This is not limited in this embodiment of this application.

FIG. 8 is a schematic flowchart of a lane inference method 800 according to this embodiment of this application. The method 700 shown in FIG. 8 may be performed by the processor 113 in the vehicle 100 in FIG. 1, or may be performed by the processor 103 in the automated driving system in FIG. 2, or may be performed by the processor 320 in the server 320 in FIG. 4.

The method 800 shown in FIG. 8 may include step 810, step 820, step 830, and step 840. It should be understood that the method 800 shown in FIG. 8 is merely an example rather than a limitation, and the method 800 may include more or fewer steps. This is not limited in this embodiment of this application. The following separately describes these steps in detail.

S810: Process a detection result of a sensor to obtain traffic element data.

The processing a detection result of a sensor herein includes: performing coordinate system conversion on the detection result of the sensor (for example, original data or an original image obtained by the sensor), determining (or recognizing) a traffic element included in the detection result of the sensor, and determining at least one of a contour, a location, and/or a moving track of the traffic element based on the detection result (corresponding to the detection result) of the sensor.

For details, refer to descriptions of the plurality of processing manners (performed on the detection result of the sensor) in FIG. 7. Details are not described herein again.

Optionally, S810 may be shown in a method 900 in FIG. 9. The method 900 may include step 910, step 920, and step 930.

S910: Perform matching and stitching on a road in the detection result and a road at a previous moment (or a previous frame).

Optionally, the detection result may be considered as a detection result of a current frame. Matching and stitching of (the road in the detection result of) the current frame and (the road in a detection result of) the previous frame may be implemented by using S910.

Optionally, matching and stitching of (the road in the detection result of) the current frame and (a road in a detection result of) another frame before the current frame may also be implemented by using S910.

S920: Perform matching and stitching on a lane identification line in the detection result and a lane identification line at a previous moment.

S930: Update a track of a moving object in the detection result, and perform filtering on the track.

It should be noted that the steps in the foregoing method 900 are not mandatory, and a corresponding step is performed only when the detection result includes a corresponding traffic element.

For example, if the detection result includes a road, S910 is performed; otherwise, S910 is not performed.

S820: Determine an environment perception image based on the traffic element data.

Optionally, S820 may be implemented by using any one of the following solutions.

### Solution 1

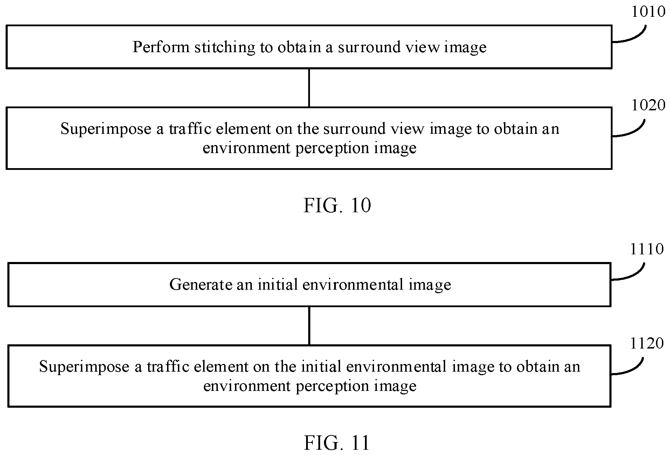

As shown in FIG. 10, Solution 1 may include step 1010 and step 1020. Details are as follows.

S1010: Perform stitching to obtain a surround view image.

Images collected by sensors of a plurality of field of views are stitched based on locations and field of views of the images that are collected by the sensors of the plurality of field of views and that are relative to the vehicle, to form the complete surround view image.

S1020: Superimpose the traffic element on the surround view image to obtain the environment perception image.

It should be noted that, in S1020, a step corresponding to a traffic element is performed only when the traffic element is included.

For example, when the detection result includes a road, the road is superimposed on the surround view image.

### Solution 2

As shown in FIG. 11, Solution 2 may include step 1110 and step 1120. Details are as follows.

S1110: Generate an initial environmental image.

For example, an initial image that is centered on the vehicle and that has a blank environment may be generated, and the image may be referred to as an initial environment image.

S1120: Superimpose the traffic element on the initial environmental image to obtain the environment perception image.

Similar to S 1020, in S 1120, a step corresponding to a traffic element is performed only when the traffic element is included.

The environment perception images obtained in the foregoing two solutions each may include a front view image and/or a surround view image. In addition, for details of the stitching method and the superposition method in the foregoing two solutions, refer to the conventional technology. Details are not described herein.

S830: Determine a driving intention of the vehicle.

Optionally, S830 may be implemented by using any one of the following methods.

### Method 1

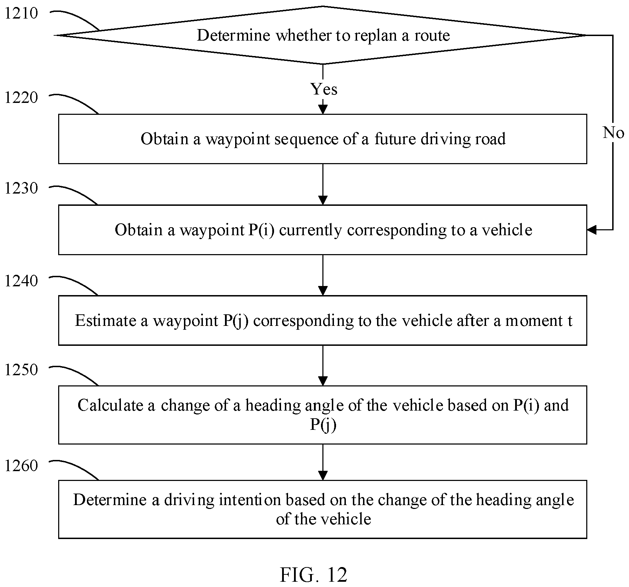

As shown in a method 1200 in FIG. 12, Method 1 may include the following steps.

S1210: Determine whether to replan a route.

Optionally, whether the vehicle deviates from a planned route may be determined based on a current location of the vehicle.

S1220: Obtain a waypoint sequence of a future driving road.

If the vehicle is deviated from the planned route, the route may be replanned, to obtain the waypoint sequence of the future driving road. If the vehicle is not deviated from the planned route, a waypoint sequence of an original future driving road may continue to be used, that is, the waypoint sequence of the original future driving road is used as the waypoint sequence of the future driving road.

The waypoint sequence of the future driving road may be represented by using iP(1), P(2), P(3), ..., P(N)}, where P(k) represents location information of a k^{th} waypoint, and both k and N are positive integers.

S 1230: Obtain a waypoint P(i) currently corresponding to the vehicle.

Optionally, the current location of the vehicle may be projected into the waypoint sequence that is of the future driving road and that is determined in S1220, and a point closest to the current location of the vehicle in the waypoint sequence of the future driving road is used as the currently corresponding waypoint P(i), where i is a positive integer.

S1240: Estimate a waypoint P(j) corresponding to the vehicle after a moment t.

Optionally, the waypoint P(j) corresponding to the vehicle after the moment t may be estimated based on a current speed of the vehicle, where t and j may be positive integers.

A value of t may be preset. For example, t may be set to 10 seconds. Alternatively, a value of t may be determined based on a location of the vehicle, a road on which the vehicle travels, and the like, for example, whether the vehicle is located in a congested road section in a city, or whether the vehicle travels on a highway.

S1250: Calculate a change of a heading angle of the vehicle based on P(i) and P(j).

S1260: Determine the driving intention based on the change of the heading angle of the vehicle.

Optionally, the driving intention determined in Method 1 may be a semantic indication (for example, a discrete driving intention), and may include two types of driving intentions.

### (1) Road-level driving intention

The road-level driving intention may correspond to road-level navigation, and may include "turn left", "turn right", "go straight", "stop", and the like.

### (2) Lane-level driving intention

The lane-level driving intention may correspond to lane-level navigation, and may include a number of a future driving lane, for example, "a first lane on the left" and "two right lanes".

### Method 2:

S 1310: Determine whether to replan a route.

Optionally, whether the vehicle deviates from a planned route may be determined based on a current location of the vehicle.

S1320: Obtain a waypoint sequence of a future driving road.

If the vehicle is deviated from the planned route, the route may be replanned, to obtain the waypoint sequence of the future driving road. If the vehicle is not deviated from the planned route, a waypoint sequence of an original future driving road may continue to be used, that is, the waypoint sequence of the original future driving road is used as the waypoint sequence of the future driving road.

The waypoint sequence of the future driving road may be represented by using iP(1), P(2), P(3), ..., P(N)}, where P(k) represents location information of a k^{th} waypoint, and both k and N are positive integers.

S1330: Obtain a waypoint P(i) currently corresponding to the vehicle.

Optionally, the current location of the vehicle may be projected into the waypoint sequence that is of the future driving road and that is determined in S1220, and a point closest to the current location of the vehicle in the waypoint sequence of the future driving road is used as the currently corresponding waypoint P(i), where i is a positive integer.

S1340: Determine a local map near the waypoint P(i).

Optionally, a map road network that is near the waypoint P(i) currently corresponding to the vehicle and that is within a radius D may be used as a local map.

D is a positive integer, and a value of D may be determined based on a current speed of the vehicle. For example, when the speed of the vehicle is low, the value of D may be 20 meters.

S1350: Estimate a waypoint P(i+m) corresponding to the vehicle after the moment t.

Optionally, the waypoint P(i+m) corresponding to the vehicle after the moment t may be estimated based on a current speed of the vehicle, where t, i, and m are all positive integers.

A value of t may be preset. For example, t may be set to 10 seconds. Alternatively, a value of t may be determined based on a location of the vehicle, a road on which the vehicle travels, and the like, for example, whether the vehicle is located in a congested road section in a city, or whether the vehicle travels on a highway.

S1360: Estimate a waypoint P(i-n) corresponding to the vehicle before the moment t.

Optionally, the waypoint P(i-n) corresponding to the vehicle before the moment t may be estimated based on a current speed of the vehicle, where n is a positive integer.

S1370: Draw a local map based on the waypoint P(i-n), the waypoint P(i), and the waypoint P(i+m).

Optionally, {P(i), ..., P(i+m)} may be used as future driving waypoints and drawn on the local map, and {P(i-n), ..., P(i)} may be used as historical waypoints (that is, traveled waypoints) and drawn on the local map. A mark of the future driving waypoint on the local map is different from a mark of the historical waypoint on the local map. For example, mark colors are different and mark types are different.

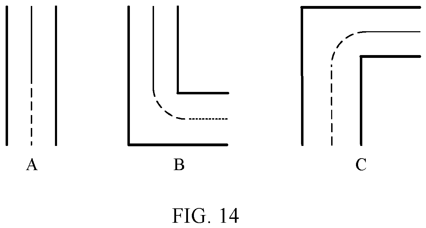

As shown in FIG. 14, a thin solid line represents a future driving waypoint, a dashed line represents a historical waypoint, and a thick solid line represents a road.

S1380: Determine the driving intention of the vehicle based on the local map.

Optionally, the driving intention determined in Method 2 may be a schematic diagram of a route (for example, a schematic diagram of a local route), and the schematic diagram of the route may include a historical route and a future driving route of the vehicle, for example, schematic diagrams of routes A, B, and C shown in FIG. 14.

In FIG. 14, a part A represents a schematic diagram of going straight on a straight road, and a future driving route is a straight route; a part B represents that the vehicle has traveled a right-turn route, and the future driving route is a straight route; and a part C represents that the vehicle has traveled a straight route, and the future driving route is a right-turn route.

S840: Perform lane inference based on the environment perception image and the driving intention by using a preset neural network model, to obtain a lane of the vehicle.

The lane of the vehicle may be expressed in any one of the following manners.

Manner 1:
a center line and a width of the lane: a length requirement of the lane is set based on an environment of the vehicle (that is, a field of view and a system requirement of the vehicle).

For example, when the vehicle is in an environment with a low vehicle speed, the length requirement of the lane may be 20 m. If sampling is performed at a distance of one point per meter, 20 location points are required to represent the lane. Each location point includes three values, which are respectively corresponding to a horizontal coordinate, a vertical coordinate, and a width of the location point.

Method 2:
cost grid map: an area around the vehicle may be divided into P^{∗}Q grids, and the lane of the vehicle may also be represented by using a plurality of grids in the P^{∗}Q grids, where both P and Q are positive integers.

Based on a cognitive capability of the vehicle-mounted sensor, a resolution of the cost grid map, that is, a size of each grid may be designed as 20 cm^{∗}20 cm or 10 cm^{∗}10 cm. Each grid has a value in a range [0, 1], indicating a generation value.

Optionally, the neural network model may be obtained after training based on the environment perception image collected offline and the driving intention.

Optionally, in S840, the environment perception image determined in S820 and the driving intention determined in S830 may be used as inputs, and lane inference is performed by using the neural network model obtained through pretraining, to obtain the lane of the vehicle.

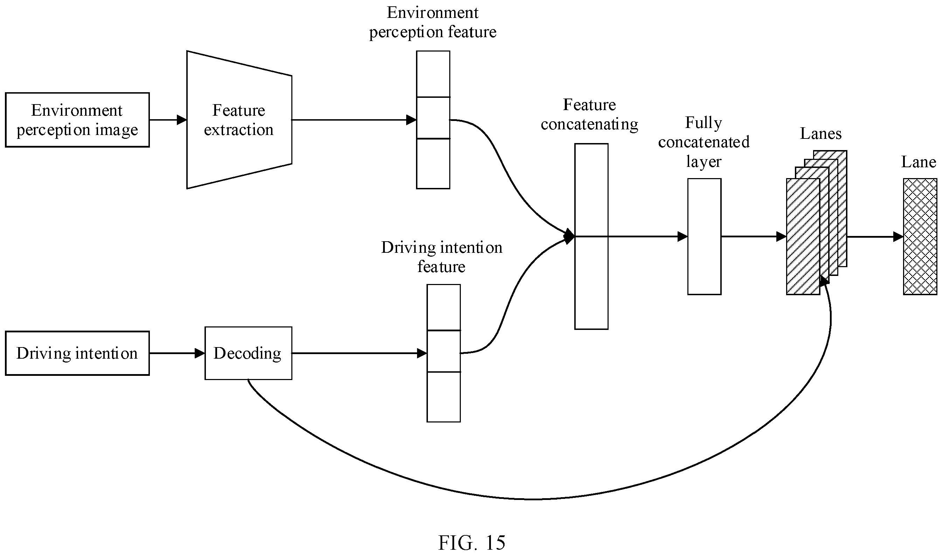

For example, as shown in FIG. 15, the environment perception image determined in Solution 1 in S820 and the driving intention determined in Method 1 in S830 may be used as inputs, and outputs are the center line of the lane and the width of the lane. A structure of the neural network model may be shown in FIG. 15.

As shown in FIG. 15, the neural network model may extract a feature from the environment perception image by using a ResNet50 network, to obtain an environment perception feature, and may obtain a driving intention feature (that is, a discrete driving intention) by decoding the driving intention by using a decoder. The driving intention feature may correspond to four discrete driving intentions: "turn left", "turn right", "go straight", and "stop" by using a four-dimensional vector. The neural network model may concatenate the environment perception feature to the driving intention feature by using a concatenate layer (concatenate layer), to obtain a concatenated feature, and input the concatenated feature to a fully concatenated layer. The fully concatenated layer may generate four ("four" herein is a quantity of discrete driving intentions) parallel fully concatenated models. Each fully concatenated model has two compression layers, and the feature is highly compressed. Finally, a depth of a feature (that is, the four parallel fully connected models) output by the fully concatenated layer is reduced to 4, and each compression layer may be discarded once (dropout), to prevent feature overfitting by shielding some concatenate elements. Finally, the neural network model selects, based on an input intention, a predicted output corresponding to the input intention from the feature (that is, the four parallel fully concatenated models) output by the fully concatenated layer, that is, one of the fully concatenated models. The fully concatenated model is a lane obtained through inference.

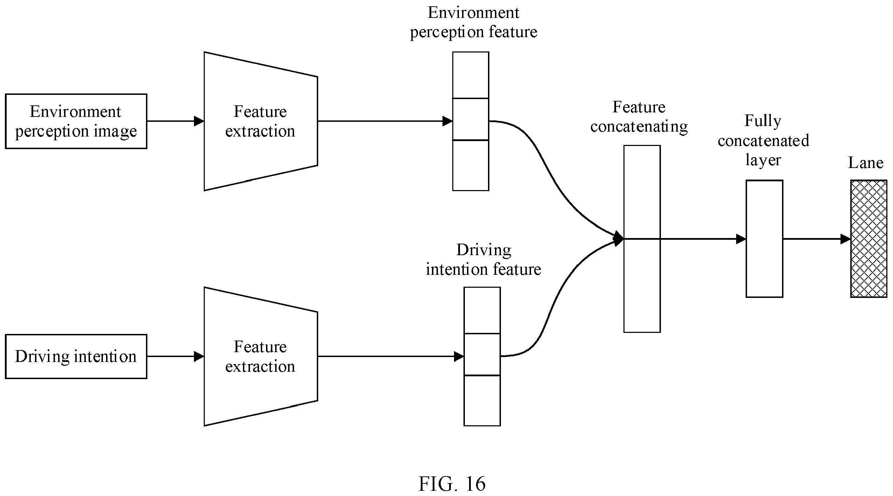

For another example, as shown in FIG. 16, the environment perception image determined in Solution 2 in S820 and the driving intention determined in Method 2 in S830 may be used as inputs, and outputs are the center line of the lane and the width of the lane. A structure of the neural network model may be shown in FIG. 16.

As shown in FIG. 16, the neural network model may extract a feature in the environment perception image by using a ResNet50 network, to obtain an environment perception feature. Similarly, the neural network model may extract a feature in the driving intention by using the ResNet50 network, to obtain a driving intention feature.

The neural network model may connect the environment perception feature to the driving intention feature by using a concatenate layer (concatenate layer), to obtain a concatenated feature, and input the connected feature to a fully concatenated layer.

The fully concatenated layer has two compression layers, and the feature may be highly compressed. Finally, a depth of a feature output by the fully concatenated layer is reduced to 1. In addition, dropout (dropout) may be performed before each compression layer, to prevent feature overfitting by shielding some concatenate elements. Finally, the fully concatenated layer outputs a lane obtained through inference.

It should be noted that, for processing processes by the neural network models in FIG. 15 and FIG. 16, refer to the conventional technology. Details are not described in this embodiment of this application.

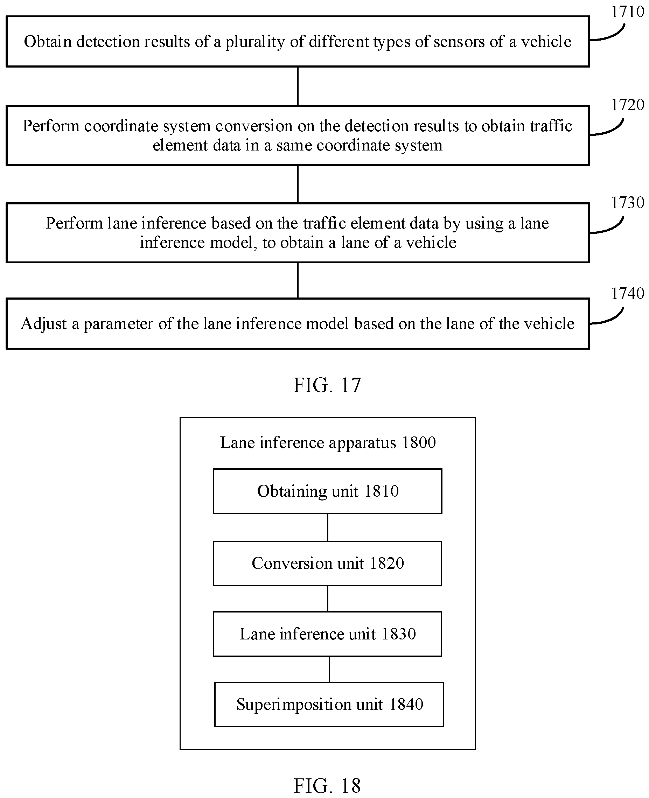

FIG. 17 is a schematic flowchart of a lane inference model training method 1700 according to an embodiment of this application. The method 1700 shown in FIG. 17 may be performed by the processor 113 in the vehicle 100 in FIG. 1, or may be performed by the processor 103 in the automated driving system in FIG. 2, or may be performed by the processor 320 in the server 320 in FIG. 4.

The method 1700 shown in FIG. 17 may include step 1710, step 1720, and step 1730. It should be understood that the method 1700 shown in FIG. 17 is merely an example rather than a limitation, and the method 1700 may include more or fewer steps. This is not limited in this embodiment of this application. The following separately describes these steps in detail.

S1710: Obtain detection results of a plurality of different types of sensors of a vehicle.

S1720: Perform coordinate system conversion on the detection results, to obtain traffic element data located in a same coordinate system.

The traffic element data may be data in a same coordinate system.

S1730: Perform lane inference based on the traffic element data by using a lane inference model, to obtain a lane of the vehicle.

S 1740: Adjust a parameter of the lane inference model based on the lane of the vehicle.

Optionally, obtaining traffic element data detected by the plurality of different types of sensors of the vehicle may include: obtaining the detection results of the plurality of different types of sensors; and processing the detection results to obtain the traffic element data.

Optionally, the processing the detection results to obtain the traffic element data may include: performing coordinate system conversion on the detection results to obtain the traffic element data.

Optionally, the plurality of different types of sensors may include a camera, a laser radar, or a millimeter-wave radar.

Optionally, the traffic element data may be a contour, a location, and/or a moving track of a traffic element, and the traffic element may include one or more of a lane identification line, another vehicle near the vehicle, a pedestrian, a road, or a traffic light.

Optionally, the method may further include: determining an environment perception image based on the traffic element data, where the environment perception image indicates an ambient environment of the vehicle and the traffic element, and the environment perception image includes at least one of a surround view image or a front view image. The performing lane inference based on the traffic element data by using a lane inference model, to obtain a lane of the vehicle may include: performing lane inference based on the environment perception image by using the lane inference model, to obtain the lane of the vehicle.

Optionally, the performing lane inference based on the traffic element data by using a lane inference model, to obtain a lane of the vehicle may include: performing lane inference based on the traffic element data and a driving intention of the vehicle by using the lane inference model, to obtain the lane of the vehicle, where the driving intention of the vehicle indicates a future driving route of the vehicle.

Optionally, the driving intention of the vehicle may be a schematic route diagram of a future driving lane of the vehicle or a vehicle semantic indication, and the vehicle semantic indication may indicate at least one of a driving direction, a driving lane, or a driving intersection of the vehicle.

Optionally, the lane of the vehicle may be represented by using a center line of the lane and a width of the lane, or the lane of the vehicle may be represented by using a road surface cost map.

FIG. 18 is a schematic block diagram of a lane inference apparatus 1800 according to an embodiment of this application. It should be understood that the lane inference apparatus 1800 shown in FIG. 18 is merely an example, and the apparatus 1800 in this embodiment of this application may further include another module or unit. It should be understood that the behavior planning apparatus 1800 can perform the steps in the method in FIG. 7 or FIG. 8. To avoid repetition, details are not described herein again.

An obtaining unit 1810 is configured to obtain detection results of a plurality of different types of sensors of a vehicle.

A conversion unit 1820 is configured to perform coordinate system conversion on the detection results, to obtain traffic element data in a same coordinate system.

A lane inference unit 1830 is configured to perform lane inference based on the traffic element data by using a preset neural network model, to obtain a lane of the vehicle.

Optionally, the obtaining unit 1810 is specifically configured to obtain the detection results of the plurality of different types of sensors, and process the detection results to obtain the traffic element data.

Optionally, the obtaining unit 1810 is specifically configured to perform coordinate system conversion on the detection results to obtain the traffic element data.

Optionally, the plurality of different types of sensors include a camera, a laser radar, or a millimeter-wave radar.

Optionally, the traffic element data is a contour, a location, and/or a moving track of a traffic element, and the traffic element includes one or more of a lane identification line, another vehicle near the vehicle, a pedestrian, a road, or a traffic light.

Optionally, the apparatus 1800 further includes a superimposition unit 1840, configured to determine an environment perception image based on the traffic element data, where the environment perception image indicates an ambient environment of the vehicle and the traffic element, and the environment perception image includes at least one of a surround view image or a front view image. The lane inference unit 1830 is specifically configured to perform lane inference based on the environment perception image by using the preset neural network model, to obtain the lane of the vehicle.

Optionally, the lane inference unit 1830 is specifically configured to perform lane inference based on the traffic element data and a driving intention of the vehicle by using the preset neural network model, to obtain the lane of the vehicle, where the driving intention of the vehicle indicates a future driving route of the vehicle.

Optionally, the driving intention of the vehicle is a schematic route diagram of a future driving lane of the vehicle or a vehicle semantic indication, and the vehicle semantic indication indicates at least one of a driving direction, a driving lane, or a driving intersection of the vehicle.

Optionally, the lane of the vehicle is represented by using a center line of the lane and a width of the lane, or the lane of the vehicle is represented by using a road surface cost map.

It should be understood that the lane inference apparatus 1800 herein is embodied in a form of a functional module. The term "module" herein may be implemented in a form of software and/or hardware. This is not specifically limited. For example, the "module" may be a software program, a hardware circuit, or a combination thereof that implements the foregoing functions. The hardware circuit may include an application-specific integrated circuit (application-specific integrated circuit, ASIC), an electronic circuit, a processor (for example, a shared processor, a dedicated processor, or a group processor) configured to execute one or more software or firmware programs and a memory, a combined logic circuit, and/or other suitable components that support the described functions.

In an example, the lane inference apparatus 1800 provided in this embodiment of this application may be a vehicle-mounted device of an automated driving vehicle, or may be a chip configured in a vehicle-mounted device, to perform the method described in this embodiment of this application.

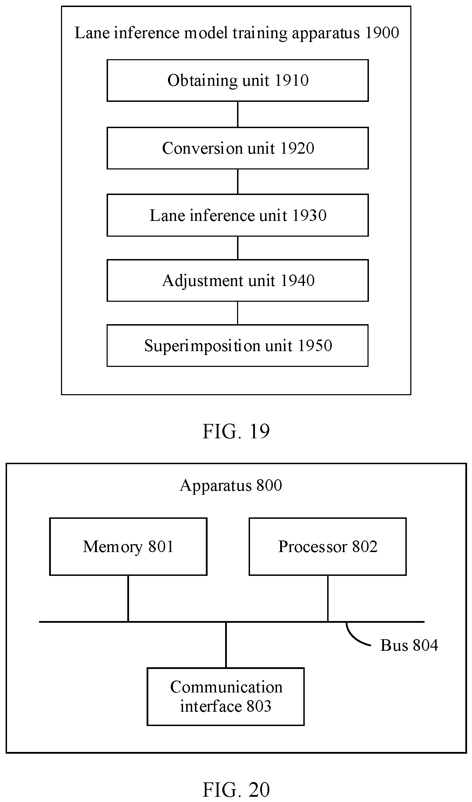

FIG. 19 is a schematic block diagram of a lane inference model training apparatus 1900 according to an embodiment of this application. It should be understood that the lane inference model training apparatus 1900 shown in FIG. 19 is merely an example, and the apparatus 1900 in this embodiment of this application may further include another module or unit. It should be understood that the behavior planning apparatus 1900 can perform the steps in the method in FIG. 17. To avoid repetition, details are not described herein again.

An obtaining unit 1910 is configured to obtain detection results of a plurality of different types of sensors of a vehicle.

A conversion unit 1920 is configured to perform coordinate system conversion on the detection results, to obtain traffic element data in a same coordinate system.

A lane inference unit 1930 is configured to perform lane inference based on the traffic element data by using a lane inference model, to obtain a lane of the vehicle.

An adjustment unit 1940 is configured to adjust a parameter of the lane inference model based on the lane of the vehicle.

Optionally, the obtaining unit 1910 is specifically configured to obtain the detection results of the plurality of different types of sensors, and process the detection results to obtain the traffic element data.

Optionally, the obtaining unit 1910 is specifically configured to perform coordinate system conversion on the detection results to obtain the traffic element data.

Optionally, the plurality of different types of sensors include a camera, a laser radar, or a millimeter-wave radar.

Optionally, the traffic element data is a contour, a location, and/or a moving track of a traffic element, and the traffic element includes one or more of a lane identification line, another vehicle near the vehicle, a pedestrian, a road, or a traffic light.

Optionally, the apparatus 1900 further includes a superimposition unit 1950, configured to determine an environment perception image based on the traffic element data, where the environment perception image indicates an ambient environment of the vehicle and the traffic element, and the environment perception image includes at least one of a surround view image or a front view image. The lane inference unit 1930 is specifically configured to perform lane inference based on the environment perception image by using the lane inference model, to obtain the lane of the vehicle.

Optionally, the lane inference unit 1930 is specifically configured to perform lane inference based on the traffic element data and a driving intention of the vehicle by using the lane inference model, to obtain the lane of the vehicle, where the driving intention of the vehicle indicates a future driving route of the vehicle.

Optionally, the driving intention of the vehicle is a schematic route diagram of a future driving lane of the vehicle or a vehicle semantic indication, and the vehicle semantic indication indicates at least one of a driving direction, a driving lane, or a driving intersection of the vehicle.

Optionally, the lane of the vehicle is represented by using a center line of the lane and a width of the lane, or the lane of the vehicle is represented by using a road surface cost map.

It should be understood that the lane inference model training apparatus 1900 herein is embodied in a form of a function module. The term "module" herein may be implemented in a form of software and/or hardware. This is not specifically limited. For example, the "module" may be a software program, a hardware circuit, or a combination thereof that implements the foregoing functions. The hardware circuit may include an application-specific integrated circuit (application-specific integrated circuit, ASIC), an electronic circuit, a processor (for example, a shared processor, a dedicated processor, or a group processor) configured to execute one or more software or firmware programs and a memory, a combined logic circuit, and/or other suitable components that support the described functions.

In an example, the lane inference model training apparatus 1900 provided in this embodiment of this application may be a vehicle-mounted device of an automated driving vehicle, or may be a chip configured in a vehicle-mounted device, to perform the method described in this embodiment of this application.

FIG. 20 is a schematic block diagram of an apparatus 800 according to an embodiment of this application. The apparatus 800 shown in FIG. 20 includes a memory 801, a processor 802, a communication interface 803, and a bus 804. The memory 801, the processor 802, and the communication interface 803 implement communication connection between each other through the bus 804.

The memory 801 may be a read only memory (read only memory, ROM), a static storage device, a dynamic storage device, or a random access memory (random access memory, RAM). The memory 801 may store a program. When the program stored in the memory 801 is executed by the processor 802, the processor 802 is configured to perform the steps of the lane inference method or the lane inference model training method in embodiments of this application, for example, the steps in the embodiment shown in FIG. 7, FIG. 8, or FIG. 17.

The processor 802 may be a general-purpose central processing unit (central processing unit, CPU), a microprocessor, an application-specific integrated circuit (application-specific integrated circuit, ASIC), or one or more integrated circuits. The processor 802 is configured to execute a related program, to implement the lane inference method or the lane inference model training method in the method embodiments of this application.

The processor 802 may be an integrated circuit chip and has a signal processing capability. In an implementation process, steps of the automated driving vehicle planning method in this embodiment of this application may be completed by using an integrated logic circuit of hardware in the processor 802, or instructions in a form of software.

The processor 802 may alternatively be a general-purpose processor, a digital signal processor (digital signal processor, DSP), an application-specific integrated circuit (ASIC), a field programmable gate array (field programmable gate array, FPGA) or another programmable logic device, a discrete gate or transistor logic device, or a discrete hardware component. The methods, the steps, and logical block diagrams that are disclosed in embodiments of this application may be implemented or performed. The general-purpose processor may be a microprocessor, or the processor may be any conventional processor or the like.

The steps of the methods disclosed with reference to embodiments of this application may be directly executed and accomplished by a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 801. The processor 802 reads information in the memory 801, and completes, in combination with hardware of the processor 802, functions that need to be performed by units included in the behavior planning apparatus of the automated driving vehicle in embodiments of this application, or performs the automated driving vehicle planning method in the method embodiments of this application. For example, the processor 802 may perform the steps/functions in the embodiment shown in FIG. 7, FIG. 8, or FIG. 17.

The communication interface 803 may use, but not limited to, a transceiver apparatus of a transceiver type, to implement communication between the apparatus 800 and another device or a communication network.

The bus 804 may include a channel on which information is transmitted between the components (for example, the memory 801, the processor 802, and the communication interface 803) of the apparatus 800.

It should be understood that the apparatus 800 shown in this embodiment of this application may be a vehicle-mounted device in an automated driving vehicle, or may be a chip configured in a vehicle-mounted device.

It should be understood that, the processor in embodiments of this application may be a central processing unit (central processing unit, CPU). The processor may be further another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of random access memories (random access memories, RAMs) can be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware, firmware, or any combination thereof. When software is used to implement embodiments, the foregoing embodiments may be implemented completely or partially in a form of a computer program product. The computer program product includes one or more computer instructions or computer programs. When the program instructions or the computer programs are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects, and indicates that three relationships may exist. For example, A and/or B may indicate the following three cases: Only A exists, both A and B exist, and only B exists. A and B may be singular or plural. In addition, the character "/" in this specification generally indicates an "or" relationship between associated objects, but may also indicate an "and/or" relationship. For details, refer to the context for understanding.

In this application, at least one means one or more, and a plurality of means two or more. At least one of the following items (pieces) or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions in embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A lane inference method, comprising:
obtaining detection results of a plurality of different types of sensors of a vehicle;
performing coordinate system conversion on the detection results, to obtain traffic element data in a same coordinate system; and
performing lane inference based on the traffic element data by using a preset neural network model, to obtain a lane of the vehicle.

2. The method according to claim 1, wherein the traffic element data is a contour, a location, and/or a moving track of a traffic element, and the traffic element comprises one or more of a lane identification line, another vehicle near the vehicle, a pedestrian, a road, or a traffic light.

3. The method according to claim 1 or 2, wherein the method further comprises:
determining an environment perception image based on the traffic element data, wherein the environment perception image indicates an ambient environment of the vehicle and the traffic element, and the environment perception image comprises at least one of a surround view image or a front view image; and
the performing lane inference based on the traffic element data by using a preset neural network model, to obtain a lane of the vehicle comprises:
performing lane inference based on the environment perception image by using the preset neural network model, to obtain the lane of the vehicle.

4. The method according to any one of claims 1 to 3, wherein the performing lane inference based on the traffic element data by using a preset neural network model, to obtain a lane of the vehicle comprises:
performing lane inference based on the traffic element data and a driving intention of the vehicle by using the preset neural network model, to obtain the lane of the vehicle, wherein the driving intention of the vehicle indicates a future driving route of the vehicle.

5. The method according to claim 4, wherein the driving intention of the vehicle is a schematic route diagram of a future driving lane of the vehicle or a vehicle semantic indication, and the vehicle semantic indication indicates at least one of a driving direction, a driving lane, or a driving intersection of the vehicle.

6. The method according to any one of claims 1 to 5, wherein the lane of the vehicle is represented by a center line of the lane and a width of the lane, or the lane of the vehicle is represented by a road surface cost map.

7. A lane inference model training method, comprising:
obtaining detection results of a plurality of different types of sensors of a vehicle;
performing coordinate system conversion on the detection results, to obtain traffic element data in a same coordinate system;
performing lane inference based on the traffic element data by using a lane inference model, to obtain a lane of the vehicle; and
adjusting a parameter of the lane inference model based on the lane of the vehicle.

8. The method according to claim 7, wherein the traffic element data is a contour, a location, and/or a moving track of a traffic element, and the traffic element comprises one or more of a lane identification line, another vehicle near the vehicle, a pedestrian, a road, or a traffic light.

9. The method according to claim 7 or 8, wherein the method further comprises:
determining an environment perception image based on the traffic element data, wherein the environment perception image indicates an ambient environment of the vehicle and the traffic element, and the environment perception image comprises at least one of a surround view image or a front view image; and
the performing lane inference based on the traffic element data by using a lane inference model, to obtain a lane of the vehicle comprises:
performing lane inference based on the environment perception image by using the lane inference model, to obtain the lane of the vehicle.

10. The method according to any one of claims 7 to 9, wherein the performing lane inference based on the traffic element data by using a lane inference model, to obtain a lane of the vehicle comprises: performing lane inference based on the traffic element data and a driving intention of the vehicle by using the lane inference model, to obtain the lane of the vehicle, wherein the driving intention of the vehicle indicates a future driving route of the vehicle.

11. The method according to claim 10, wherein the driving intention of the vehicle is a schematic route diagram of a future driving lane of the vehicle or a vehicle semantic indication, and the vehicle semantic indication indicates at least one of a driving direction, a driving lane, or a driving intersection of the vehicle.

12. The method according to any one of claims 7 to 11, wherein the lane of the vehicle is represented by a center line of the lane and a width of the lane, or the lane of the vehicle is represented by a road surface cost map.

13. A lane inference apparatus, comprising:
an obtaining unit, configured to obtain detection results of a plurality of different types of sensors of a vehicle;
a conversion unit, configured to perform coordinate system conversion on the detection results, to obtain traffic element data in a same coordinate system; and
a lane inference unit, configured to perform lane inference based on the traffic element data by using a preset neural network model, to obtain a lane of the vehicle.

14. The apparatus according to claim 13, wherein the traffic element data is a contour, a location, and/or a moving track of a traffic element, and the traffic element comprises one or more of a lane identification line, another vehicle near the vehicle, a pedestrian, a road, or a traffic light.

15. The apparatus according to claim 13 or 14, wherein the apparatus further comprises a superimposing unit, configured to:
determine an environment perception image based on the traffic element data, wherein the environment perception image indicates an ambient environment of the vehicle and the traffic element, and the environment perception image comprises at least one of a surround view image or a front view image; and
the lane inference unit is specifically configured to:
perform lane inference based on the environment perception image by using the preset neural network model, to obtain the lane of the vehicle.

16. The apparatus according to any one of claims 13 to 15, wherein the lane inference unit is specifically configured to:
perform lane inference based on the traffic element data and a driving intention of the vehicle by using the preset neural network model, to obtain the lane of the vehicle, wherein the driving intention of the vehicle indicates a future driving route of the vehicle.

17. The apparatus according to claim 16, wherein the driving intention of the vehicle is a schematic route diagram of a future driving lane of the vehicle or a vehicle semantic indication, and the vehicle semantic indication indicates at least one of a driving direction, a driving lane, or a driving intersection of the vehicle.

18. The apparatus according to any one of claims 13 to 17, wherein the lane of the vehicle is represented by a center line of the lane and a width of the lane, or the lane of the vehicle is represented by a road surface cost map.

19. A lane inference model training apparatus, comprising:
an obtaining unit, configured to obtain detection results of a plurality of different types of sensors of a vehicle;
a conversion unit, configured to perform coordinate system conversion on the detection results, to obtain traffic element data in a same coordinate system;
a lane inference unit, configured to perform lane inference based on the traffic element data by using a lane inference model, to obtain a lane of the vehicle; and
an adjustment unit, configured to adjust a parameter of the lane inference model based on the lane of the vehicle.

20. The apparatus according to claim 19, wherein the traffic element data is a contour, a location, and/or a moving track of a traffic element, and the traffic element comprises one or more of a lane identification line, another vehicle near the vehicle, a pedestrian, a road, or a traffic light.

21. The apparatus according to claim 19 or 20, wherein the apparatus further comprises a superimposing unit, configured to:
determine an environment perception image based on the traffic element data, wherein the environment perception image indicates an ambient environment of the vehicle and the traffic element, and the environment perception image comprises at least one of a surround view image or a front view image; and
the lane inference unit is specifically configured to:
perform lane inference based on the environment perception image by using the lane inference model, to obtain the lane of the vehicle.

22. The apparatus according to any one of claims 19 to 21, wherein the lane inference unit is specifically configured to:
perform lane inference based on the traffic element data and a driving intention of the vehicle by using the lane inference model, to obtain the lane of the vehicle, wherein the driving intention of the vehicle indicates a future driving route of the vehicle.

23. The apparatus according to claim 22, wherein the driving intention of the vehicle is a schematic route diagram of a future driving lane of the vehicle or a vehicle semantic indication, and the vehicle semantic indication indicates at least one of a driving direction, a driving lane, or a driving intersection of the vehicle.

24. The apparatus according to any one of claims 19 to 23, wherein the lane of the vehicle is represented by a center line of the lane and a width of the lane, or the lane of the vehicle is represented by a road surface cost map.

25. A lane inference apparatus, comprising a processor and a memory, wherein the memory is configured to store program instructions, and the processor is configured to invoke the program instructions to perform the method according to any one of claims 1 to 6.

26. A lane inference model training apparatus, comprising a processor and a memory, wherein the memory is configured to store program instructions, and the processor is configured to invoke the program instructions to perform the method according to any one of claims 7 to 12.

27. A vehicle, comprising the apparatus according to any one of claims 13 to 26.

28. A computer-readable storage medium, wherein the computer-readable storage medium stores program instructions, and when the program instructions are run by a processor, the method according to any one of claims 1 to 12 is implemented.

29. A chip, wherein the chip comprises a processor and a data interface, and the processor reads, through the data interface, instructions stored in a memory, to perform the method according to any one of claims 1 to 12.
